# EUROPEAN PATENT SPECIFICATION

(11) **EP 4 244 480 B1**
(45) Date of publication and mention of the grant of the patent: **17.09.2025**
(21) Application number: 21819352.2
(22) Date of filing: 12.11.2021
(51) Int. Cl.: F02M 37/38, B01D 35/00, F02M 37/00, F02M 37/30, F02M 37/36, B01D 36/04

(54) **FILTRATION SYSTEM**
FILTRATIONSSYSTEM
SYSTÈME DE FILTRATION

(30) Priority: 12.11.2020 DK PA202001281
(43) Date of publication of application: 20.09.2023
(73) Proprietor: Maersk A/S, 1263 Copenhagen K (DK)
(72) Inventor: WEIMAR, Henrik Bak, 1263 Copenhagen K (DK)
(74) Representative: EIP
(86) International application number: PCT/EP2021/081603
(87) International publication number: WO 2022/101455

(56) References cited:
- WO-A1-2019/145326
- FR-A5- 2 036 584
- JP-A- 2011 183 257

## Description

### TECHNICAL FIELD

The present invention relates to filtration systems for fuel systems for engines of marine vessels, to fuel systems comprising the filtration systems, to marine vessels comprising the fuel systems, and to methods of operating the filtration systems.

### BACKGROUND

Marine vessels, such as container ships, have engines that are powered by heavy fuel oil (HFO) or the like. Such fuel is typically relatively pure and uncontaminated when it leaves the refinery. However, between the refinery and the vessel, the fuel can pick up solid contaminants, such as catalyst fines, rust, dust, sand, dirt and other solid particulates, for example from dirty hoses and tanks. Such solid contaminants can wear and/or block engine components, and so they should be removed from the fuel before the fuel enters an engine of the vessel. Fuel also can become contaminated with liquid contaminants, such as fresh or salt water.

There is a general understanding in the marine industry that sufficient and effective removal of contaminants from fuel aboard a marine vessel can only be achieved using one or more centrifugal separators (also known as purifiers), which separate particles and water from fuel. Therefore, conventional marine vessels typically have one or more such centrifugal separators fluidly connected between one or more settling tanks and one or more service tanks (also known as day tanks).

A settling tank is a deep tank in the engine room of a vessel, which is used to pre-clean fuels by gravity. A liquid mixture in the settling tank clears slowly as a heavier liquid and solids sink to the bottom under influence of gravity. Often, a marine vessel will have at least two settling tanks, each with a capacity sufficient for 24 hours full load operation of all consumers aboard the vessel. Settling tanks should be designed to encourage sludge and water separation, and may be provided with baffles to reduce mixing of sludge with the fuel. The bottom of a settling tank preferably slopes towards a sludge drain, and pump suction should not be not in the vicinity of the sludge space. The temperature in settling tanks should be as high as possible, to help the solids to settle. However, the temperature should be below 75 degrees Celsius, to avoid the formation of asphaltenes, and should be no lower than 7 degrees Celsius above the "pour point" of the fuel, to ensure pumpability. The pour point is the lowest temperature at which the fuel just flows thanks to its own weight.

A service tank is a fuel tank that contains a quantity of fuel ready for immediate use. Typically, at least one service tank per fuel to be used on board, necessary for propulsion and generator systems, is provided. A service tank should preferably have capacity for sufficient fuel to enable at least eight hours of operation, at sea, and at maximum continuous rating of the propulsion plant and/or generating plant associated with that service tank.

Centrifugal separators must operate for prolonged periods of time (or constantly) to separate water from oil, due to the similar densities of the water and oil. The energy required to power the centrifugal separators of a typical large marine vessel for a year is considerable, and may for example equate to that present in approximately 300 tonnes of HFO. Furthermore, approximately 1% of HFO processed by a centrifugal separator is contained in the sludge waste product it creates. Such sludge cannot be burnt and must be disposed of in an environmentally friendly manner.
WO 2019/145326 A1 discloses a typical fuel system with filtration system for an engine of a marine vessel.

Embodiments of the present invention aim to enable sufficient decontamination of fuel for an engine of a marine vessel while addressing the aforementioned problems.

### SUMMARY

Disclosed is a filtration system for a fuel system for an engine of a marine vessel, the filtration system comprising: an inlet for fluid connection to a settling tank, the settling tank being for cleaning fuel for the engine; an outlet for fluid connection to a service tank, the service tank being for storing fuel for the engine; and an arrangement of plural primary filtration devices, wherein the arrangement is fluidly connected between the inlet and the outlet so that fuel flowing in use from the settling tank via the inlet to the service tank via the outlet passes through at least one of the primary filtration devices. The filtration system is configured to cause each respective primary filtration device of the arrangement to operate, independently of each other primary filtration device in the arrangement, selectively in either: a first mode, in which the filtration system causes fuel to flow, in use, in a first fluid direction through a filter of the respective primary filtration device, the filter being configured to remove contaminants from the fuel; or a second mode, in which the filtration system causes a fluid to flow, in use, through the filter in a second fluid direction, opposite to the first fluid direction, to dislodge the contaminants from the filter.

Providing a plurality of primary filtration devices, which are each independently back-flushable, for fluid location between a settling tank and a service tank, provides a low-power arrangement for cleaning and/or purifying fuel delivered from the settling tank to the service tank in use. The fluid caused to flow, in use, through the filter in the second fluid direction may be fuel, such as fuel filtered by one of the primary filtration devices, such as the primary filtration device comprising the filter. The fuel caused to flow, in use, through the filter in the second fluid direction may be fuel that flowed through the same filter, or another filter of the primary filtration device, in the first fluid direction, albeit absent the contaminants. Alternatively, the fluid may be a fluid other than fuel. An arrangement comprising plural filtration devices may provide more flexibility in terms of the type, size and amount of contaminant removed from the fuel. The primary filtration devices being independently back-flushable may prevent particles dislodged from a filter of one filtration device becoming lodged in a filter of another primary filtration device. The independent cleaning of each filtration device may be performed without significantly impacting the operation of other primary filtration devices in the arrangement, thereby providing a continuity of flow of fuel from the inlet to the outlet, and from the settling tank to the service tank, in use.

The primary filtration devices being independently back-flushable may provide more flexibility in the collection of contaminants dislodged from the filters of respective primary filtration devices. For example, contaminants dislodged from a filter of one primary filtration device may be collected in a respective collector associated with that primary filtration device, or in a collector associated with a subset of the plural primary filtration devices.

Optionally, the plural primary filtration devices may comprise: a first primary filtration device and a second primary filtration device in a parallel fluid arrangement with the first primary filtration device; and a third primary filtration device upstream of and in a series fluid arrangement with the first and second primary filtration devices so that the third primary filtration device may fluidly connect each of the first and second primary filtration devices with the inlet, whereby fuel flowing in use from the inlet to the outlet may pass through the third primary filtration device before passing through the first or second primary filtration devices. The first primary filtration device and the second primary filtration device may each be configured to extract smaller-diameter contaminants than the third primary filtration device is configured to extract from fuel flowing through the plural primary filtration devices in use.

Providing a series of primary filtration devices in the flow, each being configured to extract successively smaller-diameter components than an upstream primary filtration device, allows the fuel to be cleaned and/or purified to a greater degree than might otherwise be possible. A coarser filter of an upstream primary filtration device in the arrangement may remove larger-diameter particles from the fuel than a finer filter of a downstream primary filtration device removes from the fuel in order to reduce a chance of clogging the finer filter with large contaminants. The primary filtration device located closest to the inlet may be preceded by one or more pre-filters or strainers for removing particularly large matter from the fuel, such as bolts, metal particles and other debris that may be present in the fuel, so as to prevent damage of the primary filtration device. That is, rather than merely removing large particles from the fuel, the plural primary filtration devices may decontaminate, clean and/or purify the fuel to improve the quality of the fuel stored in the storage tank ready for use in the engine. This may reduce emissions arising from burning the fuel and may reduce a wear of the engine and its parts, potentially improving a longevity of the engine.

The first and second filtration devices may have "finer" filters for removing smaller-diameter contaminants from the fuel than a "coarser" filter of the third primary filtration device removes from the fuel, in use. The finer filters may be more prone to clogging and/or a pressure drop across the finer filters may be larger than across the coarser filter, particularly as they become soiled. Providing the first and second primary filtration devices in a parallel fluid arrangement may increase an effective combined area of the filters of the primary filtration devices. This may provide more favourable pressure drop characteristics across the first and second primary filtration device. This arrangement may also provide a backup in the event of a total clogging, failure or removal of one of the first and second primary filtration devices, for example during a maintenance operation. The primary filtration devices being independently backflushable may allow, for example, larger-diameter (coarser) contaminants that may be dislodged from the third primary filtration device to be collected in a different collector than smaller-diameter (finer) contaminants that may be dislodged from the first and second primary filtration devices

Optionally, the third primary filtration device may comprise a filter configured to remove contaminants having a mean diameter of greater than 10 microns, such as 25, 20, 15 or 10 microns, from fuel passing therethrough, in use. The first and second primary filtration devices may each comprise a filter configured to remove contaminants having a mean diameter of less than 10 microns, such as 5, 6, 7, 8 or 9 microns, from fuel passing therethrough, in use.

Optionally, the filtration system may comprise a pump for pumping fuel from the inlet through plurality of primary filtration devices.

Optionally, the filtration system may comprise a heater for heating fuel in a portion of the arrangement upstream of the plural primary filtration devices so that fuel flowing in use from the inlet to the outlet is heatable by the heater before flowing to the plural primary filtration devices.

Optionally, when the pump is provided, the portion of the arrangement may be located downstream of the pump and upstream of the plural primary filtration devices. Heating the fuel using the heater may reduce a viscosity of the fuel before the fuel is passed through the primary filtration devices, thereby to permit the fuel to flow more easily through the system. Optionally, the filtration system may be configurable to create a circuit comprising the portion of the arrangement and a bypass around one or more of the plural primary filtration devices, so that fuel flowing around the circuit, in use, is heated by the heater plural times without passing through the one or more of the plural primary filtration devices. Optionally, the filtration system may be configurable to pass fuel through the third primary filtration device, optionally via the heater, and to either the settling tank or the service tank, while bypassing the fuel around the first and second primary filtration devices. This may be to further heat the fuel before passing it through "finer" filters of the filtration system, thereby to improve pressure drop characteristics across the finer filters and to reduce a risk of damaging the finer filters. Optionally, the pump may be for pumping fuel around the circuit.

Optionally, the fluid caused to flow, in use, through the filter in the second fluid direction may be fuel. Optionally, the filtration system may comprise a secondary filtration device for removing the dislodged contaminants from fuel that has passed through the filter of the respective primary filtration device in the second fluid direction to provide secondary filtered fuel. Optionally, the filtration system may comprise a first port for fluidly connecting the secondary filtration device to the service tank. Optionally, the filtration system may be configured to cause the secondary filtered fuel to flow from the secondary filtration device to the first port.

Optionally, the filtration system may be configured to cause the secondary filtration device to operate selectively in either: a filtering mode, wherein the filtration system is configured to cause the fuel to flow, in use, in a filtering fluid direction through a filter of the secondary filtration device, the filter of the secondary filtration device being configured to remove the dislodged contaminants from the fuel that has passed through the filter of the primary filtration device in the filtering fluid direction; or a cleaning mode, wherein the filtration system is configured to cause fuel to flow, in use, through the filter of the secondary filtration device in a cleaning fluid direction, opposite to the filtering fluid direction, to dislodge the contaminants from the filter of the secondary filtration device. That is, the secondary filtration device may be independently backflushable.

In this way, the secondary filtration device, which may be particularly susceptible to clogging by virtue of the secondary filtration device being configured to filter highly contaminated fuel, backflushed from the or each primary filtration device, may be kept in an improved working condition.

Optionally, the first port may be the outlet. Optionally, the filtration system may comprise a second port for fluidly connecting the secondary filtration device to the settling tank, and a selector valve operable to cause the secondary filtered fuel to flow selectively to the first port or the second port.

Optionally, the filtration system may comprise a collector between one or more of the primary filtration devices and the secondary filtration device for collecting the fuel from the one or more of the primary filtration devices in the second mode. Optionally, the filtration system may be configured to cause the fuel to flow from the collector to the secondary filtration device, in use. Optionally, the filtration system may comprise a circulation valve configured to cause the secondary filtered fuel to flow selectively to the collector or the selector valve.

A first aspect of the present invention provides a filtration system for a fuel system for an engine of a marine vessel, the filtration system comprising: an inlet for fluid connection to a settling tank, the settling tank being for cleaning fuel for the engine; an outlet for fluid connection to a service tank, the service tank being for storing fuel for the engine; and a primary filtration device fluidly connected between the inlet and the outlet so that fuel flowing in use from the settling tank via the inlet to the service tank via the outlet passes through the primary filtration device. The filtration system is configured to cause the primary filtration device to operate selectively in either: a first mode, in which the filtration system causes fuel to flow, in use, in a first fluid direction through a filter of the primary filtration device, the filter being configured to remove contaminants from the fuel, or a second mode, in which the filtration system causes fuel to flow, in use, through the filter in a second fluid direction, opposite to the first fluid direction, to dislodge the contaminants from the filter. The filtration system comprises a secondary filtration device for removing the dislodged contaminants from fuel that has passed through the filter in the second fluid direction to provide secondary filtered fuel, a first port for fluidly connecting the secondary filtration device to the service tank, a second port for fluidly connecting the secondary filtration device to the settling tank, and a selector valve operable to cause the secondary filtered fuel to flow selectively to the first port or the second port, and the filtration system is configured to cause the secondary filtered fuel to flow from the secondary filtration device selectively to the first port or the second port.

In this way, the secondary filtered fuel from the secondary filtration device may be passable directly to the service tank. This may be desirable if the secondary filtration device is configured to sufficiently clean the fuel backflushed from the primary filtration device, such as if the secondary filtration device is configured to remove substantially the same-sized particles from the fuel as the primary filtration device is configured to remove, in use. Alternatively, or in addition, even if the secondary filtration device is configured to remove larger-diameter particles from the fuel than the primary filtration device is configured to remove in use, the secondary filtered fuel from the secondary filtration device may be passed to the service tank in an emergency, such as in the event of a failure of the primary filtration device or other portion of the filtration system that results in a shortage of fuel in the service tank.

Optionally, the filtration system may be configured to cause the secondary filtration device to operate selectively in either: a filtering mode, wherein the filtration system is configured to cause fuel to flow, in use, in a filtering fluid direction through a filter of the secondary filtration device, the filter of the secondary filtration device being configured to remove the dislodged contaminants from the fuel that has passed through the filter of the primary filtration device in the second fluid direction; or a cleaning mode, wherein the filtration system is configured to cause fuel to flow, in use, through the filter of the secondary filtration device in a cleaning fluid direction, opposite to the filtering fluid direction, to dislodge the contaminants from the filter of the secondary filtration device.

In this way, the secondary filtration device, which may be particularly susceptible to clogging by virtue of the secondary filtration device being configured to filter highly contaminated fuel backflushed from the primary filtration device, may be kept in an improved working condition.

Optionally, the first port may be the outlet. The secondary filtered fuel from the secondary filtration device is selectively passable to the service tank connected to the first port, for example in an emergency as described above, or to the settling tank connected to the second port, for example to pass the secondary filtered fuel through the primary filtration device once more to further filter the fuel before it is passed to the service tank.

Optionally, the filtration system may comprise a collector between one or more of the primary filtration devices and the secondary filtration device for collecting fuel from the one or more of the primary filtration devices in the second mode. Optionally, the filtration system may be configured to cause fuel to flow from the collector to the secondary filtration device, in use. Optionally, the filtration system may comprise a circulation valve configured to cause the secondary filtered fuel to flow selectively to the collector or the selector valve. In this way, the secondary filtered fuel may be passed through the secondary filtration device multiple times, for example to further clean the fuel stored in the collector before passing the fuel to first port or the second port, for example before passing fuel to the settling tank or the service tank connected to the first port or the second port respectively.

Optionally, the filtration system may comprise a fuel return valve configured to cause the fuel filtered by the primary filtration device to flow selectively to the first port or the second port. This may be to permit fuel to flow from the primary filtration device back to the settling tank, for instance to warm the fuel flowing through the primary filtration device, or to further clean the fuel by passing it through the primary filtration device plural times before passing it to the service tank. Optionally, the selector valve may be the fuel return valve. Optionally, the filtration system may comprise a pump for pumping fuel from the inlet through the arrangement.

Optionally, the filtration system may comprise a heater for heating fuel in a portion of the arrangement upstream of the primary filtration device so that fuel flowing in use from the inlet to the outlet is heatable by the heater before flowing to the primary filtration device.

Optionally, the portion of the arrangement may be located downstream of the pump and upstream of the primary filtration device. Optionally, the filtration system may be configurable to create a circuit comprising the portion of the arrangement and a bypass around the primary filtration device, so that fuel flowing around the circuit, in use, is heated by the heater plural times without passing through the primary filtration device. Optionally, the pump may be for pumping fuel around the circuit.

Also disclosed is a filtration system for a fuel system for an engine of a marine vessel, the filtration system comprising: an inlet for fluid connection to a settling tank, the settling tank being for cleaning fuel for the engine; an outlet for fluid connection to a service tank, the service tank being for storing fuel for the engine; a primary filtration device fluidly connected between the inlet and the outlet so that fuel flowing in use from the settling tank via the inlet to the service tank via the outlet passes through the primary filtration device; and a backflush supply downstream of a filter of the primary filtration device so that the backflush supply is fluidly connected between the filter and the outlet. The filtration system is configured to cause the primary filtration device to operate selectively in either: a first mode, in which the filtration system causes fuel to flow, in use, in a first fluid direction through the filter of the primary filtration device, the filter being configured to remove contaminants from the fuel; or a second mode, in which the filtration system causes a fluid to flow, in use, from the backflush supply through the filter in a second fluid direction, opposite to the first fluid direction, to dislodge the contaminants from the filter.

That is, the backflush supply is configured to provide fluid for dislodging the contaminants from the filter of the primary filtration device. The fluid may be fuel, such as fuel filtered by the primary filtration device in the first mode of operation. The fuel caused to flow, in use, through the filter in the second fluid direction may be fuel that flowed through the same filter, or another filter in the primary filtration device, in the first fluid direction, albeit absent the contaminants. Alternatively, the fluid may be a fluid other than fuel. The backflush supply is provided "between the filter and the outlet", by which is meant either that the backflush supply is fluidly connected between the filter and the outlet so as to be downstream of the filter and upstream of the outlet, or that a fluid path connects the filter and the outlet and the backflush supply interfaces with the fluid path at a point between the filter and the outlet, so that the point is downstream of the filter and upstream of the outlet. The backflush supply is provided upstream of the service tank, in use. That is, the fluid, such as fuel, may be provided from the backflush supply to backflush the primary filtration device without requiring fuel to flow from the service tank towards the primary filtration device, in use. This may be beneficial, for example, so as not to unduly disturb the fuel stored in the service tank, which may still comprise fine particles not captured by the primary filtration device and which may be left to settle to the bottom of the service tank over time. Moreover, the fluid, such as fuel, stored in the backflush supply may be warmer than fuel stored in the service tank, for instance due to heating of the fuel upstream of, and/or within the backflush supply. Thus, it may be easier to pass fuel through the filter of the primary filtration device from the backflush supply than from the service tank. A separate pump for pumping fuel from the service tank to the primary filtration device may also be omitted, advantageously.

The filtration system may be configured to preclude passing fuel from the outlet (and thus from the service tank, in use) to the primary filtration device when the primary filtration device is operating in the second mode. For example, the filtration system may comprise a valve for isolating the outlet (and thus the service tank, in use) from the filter of the primary filtration device when the primary filtration device is operating in the second mode (i.e. when fuel is flowing from the backflush supply through the filter in the second fluid direction). The valve (or a separate valve) may also isolate the outlet from the backflush supply, so that no fluid can flow from the outlet to the backflush supply, when the primary filtration device is operating in the second mode.

Optionally, the backflush supply may comprise an accumulator. The filtration system may be configured to cause the backflush supply (e.g. accumulator) to store filtered fuel that is filtered by the filter of the primary filtration device in the first mode. In this way, the filter may be backflushed using cleaned fuel, so as not to further soil the filter when fuel is passed therethrough in the second fluid direction. Optionally, the backflush supply (e.g. accumulator) may be integral with the primary filtration device. Optionally, the backflush supply (e.g. accumulator) may comprise an actuator for expelling fuel from the backflush supply (e.g. accumulator) and through the filter in the second fluid direction. The actuator may be operated by compressed air, for example.

Optionally, the filter may be a first filter and the primary filtration device may comprise a second filter, and the filtration system may be configured to cause fuel to flow, in the second mode, in the first fluid direction through the second filter.

In this way, the filtration system may be configured to cause the primary filtration device to operate in the first and second modes simultaneously. That is, the filtration system may cause fuel to be passed to the outlet, such as towards the service tank, at the same time as backflushing a filter of the primary filtration device. This may advantageously provide a continuous filtration of fuel being passed to the outlet, such as to the service tank, even when a filter of the primary filtration device is being cleaned.

Optionally, the filtration system may be configured to cause fuel to flow in the first fluid direction through both the first and second filters in the first mode. This may provide a higher level of filtration and/or a lower pressure drop through the primary filtration device in the first mode of operation than if just a single filter, or a subset of filters in the primary filtration device, were to be in use.

Optionally, the filtration system comprises a fluid line, or fluid path as referred to above, upstream of the outlet and downstream of the filter, and the backflush supply comprises a tap for tapping fuel from the fluid line. Optionally, the fluid line, or path, is a part of the backflush supply. Optionally, the filtration system may be configured in the second mode to: cause fuel to flow through the second filter in the first fluid direction to the fluid line; and cause fuel to pass from the fluid line via the tap through the first filter in the second fluid direction. In this way, a separate accumulator may be omitted and pressurised fuel in the fuel line, for instance under pressure due to the action of a pump for pumping fuel through from the inlet to the outlet via the primary filtration device, may be used to backflush the primary filtration device. This may reduce a cost, weight and/or complexity of the filtration system.

The following optional features may apply to any one of the constructions described above, including the first aspect of the present invention. Optionally the filtration system may comprise a filtration system controller for controlling the filtration system. Optionally, the filtration system may comprise a sensor configured to detect a condition of a filter of a filtration device, such as a primary or secondary filtration device, or a parameter of fuel at a location between the filter and the service tank, and to send a signal to the filtration system controller on the basis of the condition or parameter detected. Optionally, the filtration system controller may be configured to cause the filtration system to operate in the second mode on the basis of the signal.

A second aspect of the present invention provides a fuel system for an engine of a marine vessel, the fuel system comprising: a settling tank for cleaning fuel for the engine; a service tank for storing fuel for the engine; and a filtration system according to the first aspect, wherein the filtration system is fluidly connected between the settling tank and the service tank so that the inlet of the filtration system is fluidly connected to the settling tank and the outlet of the filtration system is fluidly connected to the service tank.

A third aspect of the present invention provides a marine vessel comprising the fuel system of the second aspect or the filtration system of the first aspect.

Also disclosed is a method of operating a filtration system for a fuel system for an engine of a marine vessel, the filtration system comprising: an inlet fluidly connected to a settling tank, the settling tank being for cleaning fuel for the engine; an outlet fluidly connected to a service tank, the service tank being for storing fuel for the engine; and an arrangement of plural primary filtration devices, wherein the arrangement is fluidly connected between the inlet and the outlet so that fuel flowing in use from the settling tank via the inlet to the service tank via the outlet passes through at least one of the primary filtration devices. The method comprises causing each respective primary filtration device of the arrangement to operate, independently of each other primary filtration device in the arrangement, selectively in either: a first mode, in which the filtration system causes fuel to flow in a first fluid direction through a filter of the respective primary filtration device, the filter being configured to remove contaminants from the fuel; or a second mode, in which the filtration system causes a fluid to flow through the filter in a second fluid direction, opposite to the first fluid direction, to dislodge the contaminants from the filter.

The fluid caused to flow, in use, through the filter in the second fluid direction may be fuel, such as fuel filtered by one of the primary filtration devices, such as the primary filtration device comprising the filter. The fuel caused to flow, in use, through the filter in the second fluid direction may be fuel that flowed through the same filter, or another filter of the primary filtration device, in the first fluid direction, albeit absent the contaminants. Alternatively, the fluid may be a fluid other than fuel. Optionally, the plural primary filtration devices may comprise: a first primary filtration device and a second primary filtration device in a parallel fluid arrangement with the first primary filtration device; and a third primary filtration device upstream of and in a series fluid arrangement with the first and second primary filtration devices so that the third primary filtration device fluidly connects each of the first and second primary filtration devices with the inlet. Optionally, the first primary filtration device and the second primary filtration device may each be configured to extract smaller-diameter contaminants than the third primary filtration device is configured to extract from fuel flowing through the plural primary filtration devices in use. Optionally, the method may comprise causing fuel to flow from the inlet to the outlet through the third primary filtration device before flowing through the first or second primary filtration devices.

Optionally, the filtration system may comprise a pump for pumping fuel from the inlet through the plurality of primary filtration devices and the method may comprise operating the pump to cause fuel to flow from the inlet through the plurality of primary filtration devices.

Optionally, the filtration system may comprise a heater for heating fuel in a portion of the arrangement upstream of the plural primary filtration devices. Optionally, the portion of the arrangement may be located downstream of the pump and upstream of the plural primary filtration devices. Optionally, the method may comprise operating the heater to heat the fuel flowing in use from the inlet to the outlet, and causing the fuel heated by the heater to flow to the plural primary filtration devices.

Optionally, the filtration system may be configurable to create a circuit comprising the portion of the arrangement and a bypass around one or more of the plural primary filtration devices, and the method may comprise causing fuel to flow through the circuit so that fuel is heated by the heater plural times without passing through the one or more of the plural primary filtration devices. Optionally, the method may comprise causing fuel to flow through the third primary filtration device, optionally via the heater, and to either the settling tank or the service tank, while bypassing the first and second primary filtration devices. Optionally, the pump may be for pumping fuel around the circuit and the method may comprise operating the pump to cause fuel to flow around the circuit.

Optionally, the fluid caused to flow, in use, through the filter in the second fluid direction may be fuel. Optionally, the filtration system may comprise a secondary filtration device for removing the dislodged contaminants from fuel that has passed through the filter of the respective primary filtration device in the second fluid direction, and the method may comprise causing fuel that has passed through the filter of the respective primary filtration device in the second fluid direction to pass through the secondary filtration device to provide secondary filtered fuel. Optionally, the filtration system may comprise a first port for fluidly connecting the secondary filtration device to the service tank and the method may comprise causing the secondary filtered fuel to flow from the secondary filtration device to the first port.

Optionally, the method may comprise causing the secondary filtration device to operate in either: a filtering mode, wherein the filtration system is configured to cause the fuel to flow, in use, in a filtering fluid direction through a filter of the secondary filtration device, the filter of the secondary filtration device being configured to remove the dislodged contaminants from the fuel that has passed through the filter of the primary filtration device in the filtering fluid direction; or a cleaning mode, wherein the filtration system is configured to cause fuel to flow, in use, through the filter of the secondary filtration device in a cleaning fluid direction, opposite to the filtering fluid direction, to dislodge the contaminants from the filter of the secondary filtration device.

Optionally, the first port may be the outlet. Optionally, the filtration system may comprise a second port for fluidly connecting the secondary filtration device to the settling tank, and a selector valve for selectively fluidly coupling the secondary filtration device with the first port or the second port, and the method may comprise causing, such as by operating the selector valve, the secondary filtered fuel to flow selectively to the first port or the second port.

Optionally, the filtration system may comprise a collector between one or more of the primary filtration devices and the secondary filtration device for collecting the fuel from the one or more of the primary filtration devices in the second mode. Optionally, the method may comprise causing the fuel to flow from the collector to the secondary filtration device. Optionally, the filtration system may comprise a circulation valve for selectively fluidly coupling the secondary filtration device with the collector or the selector valve, and the method may comprise causing, such as by operating the circulation valve, the secondary filtered fuel to flow selectively to the collector or the selector valve.

A fourth aspect of the present invention provides a method of operating a filtration system for a fuel system for an engine of a marine vessel, the filtration system comprising: an inlet for fluid connection to a settling tank, the settling tank being for cleaning fuel for the engine; an outlet for fluid connection to a service tank, the service tank being for storing fuel for the engine; and a primary filtration device fluidly connected between the inlet and the outlet so that fuel flowing in use from the settling tank via the inlet to the service tank via the outlet passes through the primary filtration device. The method comprises causing the primary filtration device to operate selectively in either: a first mode, in which the filtration system causes fuel to flow, in use, in a first fluid direction through a filter of the primary filtration device, the filter being configured to remove contaminants from the fuel; or a second mode, in which the filtration system causes fuel to flow, in use, through the filter in a second fluid direction, opposite to the first fluid direction, to dislodge the contaminants from the filter. The filtration system comprises a secondary filtration device for removing the dislodged contaminants from fuel that has passed through the filter in the second fluid direction to provide secondary filtered fuel, a first port for fluidly connecting the secondary filtration device to the service tank, a second port for fluidly connecting the secondary filtration device to the settling tank, and a selector valve for selectively fluidly coupling the secondary filtration device with the first port or the second port, and the method comprises causing the secondary filtered fuel to flow from the secondary filtration device selectively to the first port or the second port.

Optionally, the method may comprise causing the secondary filtration device to operate in either: a filtering mode, wherein the filtration system is configured to cause fuel to flow, in use, in a filtering fluid direction through a filter of the secondary filtration device, the filter of the secondary filtration device being configured to remove the dislodged contaminants from the fuel that has passed through the filter of the primary filtration device in the filtering fluid direction; or a cleaning mode, wherein the filtration system is configured to cause fuel to flow, in use, through the filter of the secondary filtration device in a cleaning fluid direction, opposite to the filtering fluid direction, to dislodge the contaminants from the filter of the secondary filtration device.

Optionally, the first port may be the outlet.

Optionally, the filtration system may comprise a collector between the primary filtration device and the secondary filtration device for collecting fuel from the primary filtration device in the second mode. Optionally, the method may comprise causing fuel to flow from the collector to the secondary filtration device. Optionally, the filtration system may comprise a circulation valve for selectively fluidly coupling the secondary filtration device with the collector or the selector valve, and the method may comprise causing, for example by operating the circulation valve, the secondary filtered fuel to flow selectively to the collector or the selector valve.

Optionally, the filtration system may comprise a fuel return valve selectively fluidly coupling the primary filtration device to the first port or the second port, and the method may comprise causing, for example by operating the fuel return valve, the fuel filtered by the primary filtration device to flow selectively to the first port or the second port. Optionally, the filtration system may comprise a pump for pumping fuel from the inlet through the arrangement, and the method may comprise operating the pump to cause fuel to flow from the inlet through the arrangement.

Optionally, the filtration system may comprise a heater for heating fuel in a portion of the arrangement upstream of the primary filtration device. Optionally, the portion of the arrangement may be located downstream of the pump and upstream of the primary filtration device. Optionally, the method may comprise operating the heater to heat the fuel flowing in use from the inlet to the outlet, and causing the fuel heated by the heater to flow to the primary filtration device.

Optionally, the filtration system may be configurable to create a circuit comprising the portion of the arrangement and a bypass around the primary filtration device, and the method may comprise causing fuel to flow through the circuit so that fuel is heated by the heater plural times without passing through the primary filtration device. Optionally, the pump may be for pumping fuel around the circuit and the method may comprise operating the pump to cause fuel to flow around the circuit.

Also disclosed is a method of operating a filtration system for a fuel system for an engine of a marine vessel, the filtration system comprising: an inlet fluidly connected to a settling tank, the settling tank being for cleaning fuel for the engine; an outlet fluidly connected to a service tank, the service tank being for storing fuel for the engine; a primary filtration device fluidly connected between the inlet and the outlet so that fuel flowing in use from the settling tank via the inlet to the service tank via the outlet passes through the primary filtration device; and a backflush supply downstream of a filter of the primary filtration device so that the backflush supply is fluidly connected between the filter and the outlet. The method comprises causing the primary filtration device to operate selectively in either: a first mode, in which the filtration system causes fuel to flow in a first fluid direction through the filter of the primary filtration device, the filter being configured to remove contaminants from the fuel, or a second mode, in which the filtration system causes a fluid to flow from the backflush supply through the filter in a second fluid direction, opposite to the first fluid direction, to dislodge the contaminants from the filter;

The fluid may be fuel, such as fuel, filtered by the primary filtration device in the first mode of operation. The fuel caused to flow, in use, through the filter in the second fluid direction may be fuel that flowed through the same filter, or another filter in the primary filtration device, in the first fluid direction, albeit absent the contaminants. Alternatively, the fluid may be a fluid other than fuel. The backflush supply is provided upstream of the service tank, in use. Optionally, the backflush supply may comprise an accumulator. The method may comprise causing the backflush supply (e.g. accumulator) to store filtered fuel that is filtered by the filter of the primary filtration device in the first mode. Optionally, the backflush supply (e.g. accumulator) may be integral with the primary filtration device. Optionally, the backflush supply (e.g. accumulator) may comprise, or be associated with, an actuator and the method may comprise causing, for example by operating the actuator, fuel to be expelled from the backflush supply (e.g. accumulator) and through the filter in the second fluid direction. The method may comprise operating the actuator using compressed air, for example.

Optionally, the filter may be a first filter and the primary filtration device may comprise a second filter, and the method may comprise causing the primary filtration device to operate in the second mode to cause fuel to flow in the first fluid direction through the second filter. Optionally, the method may comprise causing the primary filtration device to operate in the first mode to cause fuel to flow in the first fluid direction through both the first and second filters.

Optionally, the backflush supply may comprise a fluid line upstream of the outlet and downstream of the filter, and a tap for tapping fuel from the fluid line. Optionally, the method may comprise causing the primary filtration device to operate in the second mode to: cause fuel to flow through the second filter in the first fluid direction to the fluid line; and cause fuel to pass from the backflush supply through the first filter in the second fluid direction.

The following optional features may apply to any one of the methods described above, including the fourth aspect of the present invention. Optionally the filtration system may comprise a filtration system controller for controlling the filtration system and the method may be implemented by the controller. Optionally, the filtration system may comprise a sensor and the method may comprise detecting, with the sensor, a condition of a filter of a filtration device, such as a primary or secondary filtration device, or a parameter of fuel at a location between the filter and the service tank, and causing the sensor to send a signal to the filtration system controller on the basis of the condition or parameter detected. Optionally, the method may comprise causing the or each primary filtration device to operate in the second mode on the basis of the signal.

### BRIEF DESCRIPTION OF THE DRAWINGS

Embodiments of the invention will now be described, by way of example only, with reference to the accompanying drawings, in which:
Figure 1 shows a schematic side view of an example of a marine vessel according to an embodiment of the present invention;
Figure 2 shows a schematic view of an example of a fuel system according to an embodiment of the present invention;
Figure 3A shows a schematic view of an example of a filtration device of a filtration system of the fuel system of Figure 2;
Figure 3B shows a schematic view of the filtration device of Figure 3A being operated in a different mode of operation;
Figure 4A shows a flow chart illustrating an example of a method of operating a filtration system according to an embodiment of the present invention;
Figure 4B shows a flow chart illustrating an example of another method of operating a filtration system according to an embodiment of the present invention; and
Figure 4C shows a flow chart illustrating an example of another method of operating a filtration system according to an embodiment of the present invention.

### DETAILED DESCRIPTION

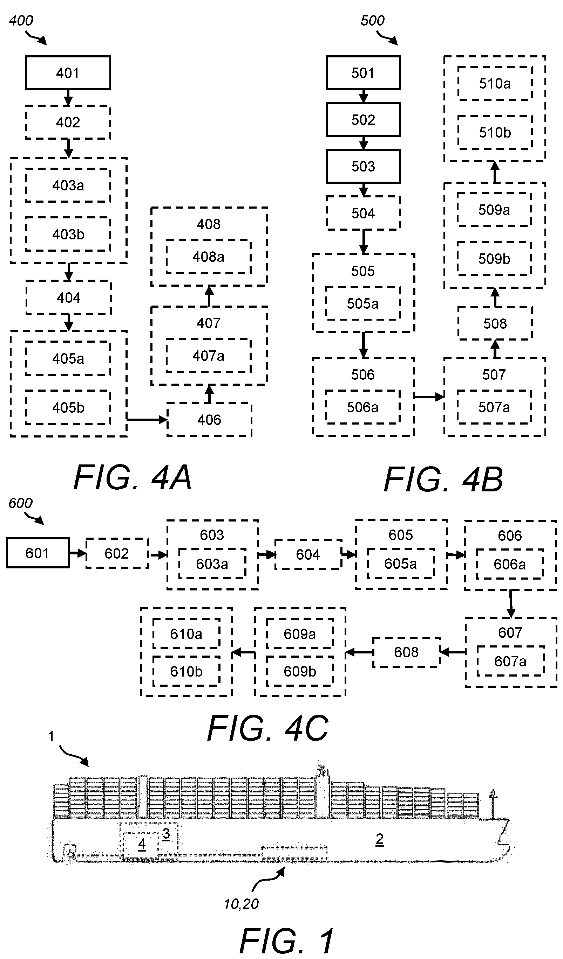

Figure 1 shows a schematic side view of an example of a marine vessel according to an embodiment of the present invention. In this embodiment, the vessel is a container ship 1. In other embodiments, the marine vessel may be another form of cargo vessel, such as a tanker, a dry-bulk carrier or a reefer ship, or a passenger vessel or any other marine vessel that uses liquid fuel, such as fuel oil or heavy fuel oil.

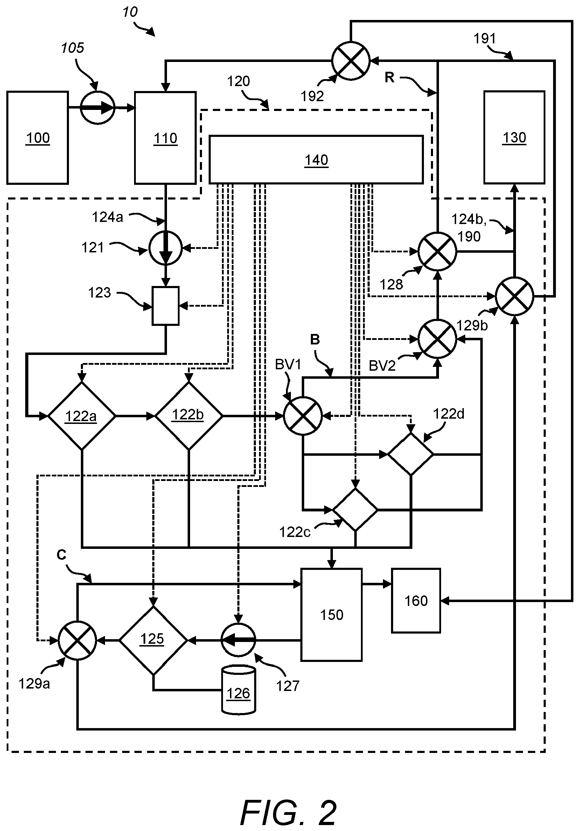

The marine vessel 1 has a hull 2 and one or more engine rooms 3 inside the hull 2. The marine vessel 1 is powered by one or more large internal combustion engines 4, such as four-stroke or two-stroke self-igniting combustion engines 4, located in an engine room 3. The engine(s) 4 drive(s) a propulsion mechanism (such as one or more propellers). The vessel 1 may also comprise one or more auxiliary engines (known as generator sets) that provide power and/or heat for various consumers of power aboard the vessel 1. The vessel 1 also comprises a fuel system 10 for supplying fuel to the engine(s) 4. The fuel system 10 may be any fuel system described herein as an embodiment of the present invention, such as that shown in Figure 2.

The skilled person will be familiar with the components and systems of a marine vessel, and so further detailed discussion thereof is omitted for brevity.

As noted above, solid contaminants in fuel can wear and/or block engine components, and so it is highly preferable that such solid contaminants be removed from the fuel before the fuel enters the engine. As also noted above, there is a common understanding in the marine industry that sufficient and effective removal of contaminants from fuel aboard a marine vessel can only be achieved using one or more centrifugal separators. This is at least in part because it is believed in the industry that it is essential to remove both solid contaminants and liquid contaminants (e.g. fresh or salt water) from the fuel. However, contamination of fuel by water is rare (or usually present only to a small degree), and an engine (e.g. a diesel engine) of a marine vessel is, in most cases, able to burn fuel (such as HFO) even if there is some contamination by water. Accordingly, the present invention is predicated on a view that it is sufficient for solid contaminants to be removed from fuel before the fuel enters an engine, and that liquid contaminants (particularly water) need not be removed.

One known way of removing solid contaminants from oil on a marine vessel is through the use of a filter. However, while it is known to use filters for filtering lubrication oils, it is generally not preferred in the marine industry to use a filter to filter fuel. This is because the filter would become blocked with the solid contaminants, resulting in the efficiency of the system decreasing. Once blocked, a filter can be partially unblocked by back flushing air through the filter to remove the particulate matter from the filter. However, air has a relatively low inertia, and so once a small portion of a filter is cleaned, the air will thereafter all flow through the cleaned portion of the filter without dislodging the particular matter on the rest of the filter. Therefore, air is not particularly effective at removing particulate matter from the surface of a filter.

Embodiments of the present invention provide filtration systems and fuel systems comprising such filtration systems for use in carrying out removal of solid contaminants from fuel while addressing the aforementioned problems.

Figure 2 shows a schematic view of an example of a fuel system 10 according to an embodiment of the present invention. The fuel system 10 is for an engine of a marine vessel. By "for an engine" it is meant that the fuel system 10 is for one or more engines of the marine vessel. That is, the fuel system 10 may be for supplying fuel to one engine or to plural engines of a marine vessel, such as the engines 4 and marine vessel 1 shown in Figure 1 or any variants thereof described herein.

Broadly speaking, the fuel system 10 comprises a settling tank 110 for cleaning fuel for the engine 4; a service tank 130 for storing fuel for the engine 4; and a filtration system 120 comprising a plurality of primary filtration devices 122a-d through which fuel flowing from the settling tank 110 to the service tank 130 passes. As will be described in more detail below, the filtration system 120 is configured to be operable in a first mode in which the or each primary filtration device 122a-d removes contaminants from fuel flowing from the settling tank 110 to the service tank 130, and in a second mode in which fuel flows through each primary filtration device 122 to dislodge the contaminants from each primary filtration device 122.

More specifically, in this embodiment the fuel system 10 comprises a storage tank 100 for storing a volume of fuel for the engine 4. In some embodiments, the fuel system 10 may comprise a plurality of such storage tanks 100. The storage tanks 100 are also known as bunker tanks 100. The storage tanks 100 store fuel for auxiliary engines, boilers or anything else that consumes fuel in addition to the main engine 4. The storage tank 100 may be fillable during fuelling of the vessel 1 (sometimes known as a bunkering operation) from a container onboard another vessel, such as a barge, or vehicle or on shore. If the fuel is a heavy and viscous fuel, such as HFO, then the settling tank 110 may be heated (such as to approximately 80 degrees Celsius), in order to reduce the viscosity and thickness of the fuel. This makes pumping the fuel easier through the fuel system 10. In some embodiments, the fuel can be heated to above 100 degrees Celsius to evaporate water from the settling tank 110.

The fuel system 100 also comprises a fuel transfer pump 105 for pumping fuel from the storage tank 100 to the settling tank 110. In this embodiment, the storage tank 100 is fluidly connected to the settling tank 110 via the fuel transfer pump 105, so that fuel is flowable from the storage tank 100 to the settling tank 110 via the fuel transfer pump 105. In other embodiments, the fuel transfer pump 105 may be located elsewhere. For example, in some embodiments fuel transfer pump 105 may be located in the storage tank 100 or in the settling tank 110. In some embodiments, the storage tank 100 and/or the fuel transfer pump 105 may be omitted. For example, in some embodiments, fuel may be able to flow from the storage tank 100 to the settling tank 110 under the influence of gravity.

In some embodiments, the fuel system 10 comprises one or more valves (not shown) through which fuel flowing from the storage tank 100 to the settling tank 110 passes. The valve(s) may be for controlling fuel flow between the storage tank 100 and the settling tank 110. More specifically, the valve(s) may be for controlling fuel flow from the storage tank 100 to the settling tank 110, and/or may be for controlling fuel flow from the settling tank 110 to the storage tank 100. For example, the valve(s) may be closable to prevent or hinder fuel flow from the storage tank 100 to the settling tank 110, and/or to prevent or hinder fuel flow from the settling tank 110 to the storage tank 100.

In this embodiment, the filtration system comprises an arrangement of primary filtration devices 122a-d, the arrangement comprising a plurality of primary filtration devices 122a-d, specifically four primary filtration devices 122a-d. The settling tank 110 is fluidly connectable to the service tank 130 via the arrangement of primary filtration devices 122a-d, so that fuel is flowable from the settling tank 110 to the service tank 130 via the plurality of primary filtration devices 122a-d. In some embodiments, there may be only one primary filtration device 122a. In other embodiments, there may be any other suitable number of primary filtration devices 122a-d. The filtration system 120 comprises an inlet 124a for fluid connection to the settling tank 110 and an outlet 124b for fluid connection to the service tank 130. Each primary filtration device 122a-d is fluidly connected between the inlet 124a and the outlet 124b so that fuel flowing from the settling tank 110 to the service tank 130 can pass through any of the plurality of primary filtration devices 122a-d in use, as will be described. In some embodiments, one or more valves, such as a non-return valve (not shown), may be provided downstream of the or each primary filtration device 122a-d, such as between the or each primary filtration device 122a-d and the outlet 124b, to prevent fuel from flowing towards the or each primary filtration device 122a-d from the outlet 124b. In some embodiments, a backflush valve 182a, 182b of the or each primary filtration device 122a-d is configured to prevent fuel from flowing from the outlet 124b (and thus from the service tank 130, in use) towards a respective filter 180a, 180b when the or each primary filtration device 122a-d is operated in the second mode. Alternatively, or in addition, any other suitable valve, for example one of the valves shown and described herein in relation to Figure 1, such as the fuel return valve 128 described hereinafter, may provide this functionality.

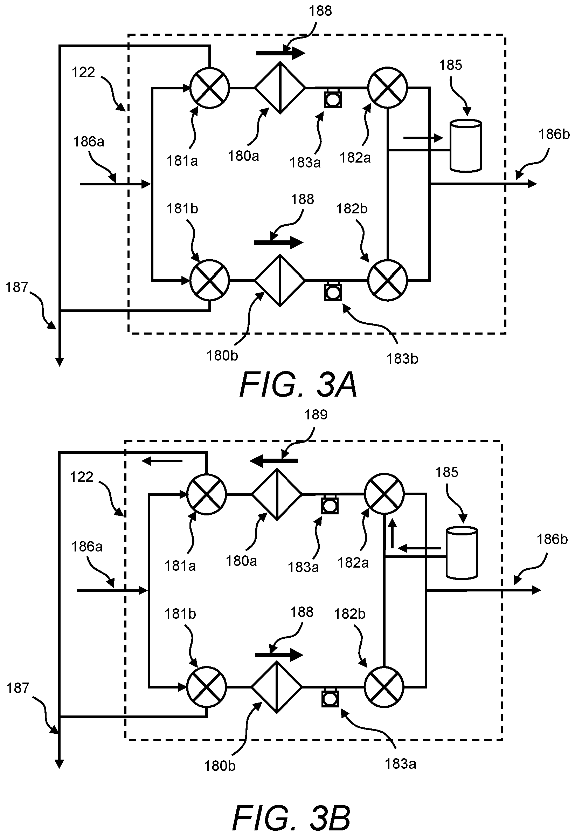

The filtration system 120 is configured to cause each respective primary filtration device 122a-d to operate, independently of each other primary filtration device 122a-d, selectively in either the first mode or the second mode, as will be described in more detail hereinafter with reference to Figures 3A and 3B.

The arrangement 122 comprises a first primary filtration device 122a and a second primary filtration device 122b in a series fluid arrangement with each other. The arrangement also comprises a third primary filtration device 122c and a fourth primary filtration device 122d in a parallel fluid arrangement with the third primary filtration device 122c. The third and fourth primary filtration devices 122c-d are each in a series fluid arrangement with the first and second filtration devices 122a-d. That is, the first and second primary filtration devices 122a-b fluidly connect each of the third and fourth primary filtration devices 122c-d with the inlet 124a, whereby fuel flowing in use from the inlet 124a to the outlet 124b passes through the first and second primary filtration devices 122a-b before passing through the third and/or fourth primary filtration devices 122c-d. It will be understood that, in some embodiments, each of the primary filtration devices 122a-d may be fluidly connected in series with one another, or in an arrangement comprising any suitable combination of series and parallel fluid connections between the primary filtration devices 122a-d.

Different types of filtration device can be used for the primary filtration devices 122a-d in different embodiments. One or more of the primary filtration devices 122a-d can, for example, comprise a surface filter, where particulate matter builds up on the surface of the primary filtration device 122, or a depth filter, where particular matter is trapped inside the filter medium. The primary filtration devices 122a-d may each comprise one or more filters, as will be described in more detail hereinafter with reference to Figures 3A and 3B.

In the embodiment illustrated in Figure 2, the filtration system 120 comprises a fuel pump 121 for pumping fuel from the settling tank 110 through the filtration system 120, such as for pumping fuel through the arrangement of primary filtration devices 122a-d. In some embodiments, the fuel pump 121 can be located upstream or downstream of the inlet 124a. In this embodiment, the settling tank 110 is fluidly connected to the plurality of primary filtration devices 122a-d via the fuel pump 121, so that fuel is flowable from the settling tank 110 to each of the primary filtration devices 122a-d via the fuel pump 121. In other embodiments, the fuel pump 121 may be located elsewhere. For example, in some embodiments the fuel pump 121 may be located in the settling tank 110, or between the one of the primary filtration devices 122a-d and the service tank 130. In some embodiments, the fuel pump 121 may be integral with one of the primary filtration devices 122a-d. In some embodiments, the fuel pump 121 may be a part of the fuel system 10 and the filtration system 120 may be provided without the fuel pump 121. In some embodiments, the fuel pump 121 may be omitted. For example, in some embodiments, fuel may be able to flow from the settling tank 110 through the plurality of primary filtration devices 122a-d under the influence of gravity. However, it is greatly preferred that the fuel pump 121 is provided, to help the fuel system 10 reliably meet the fuel demand of the engine 4. Moreover, it is easier to push fuel through the primary filtration devices 122a-d than pull it, and so it is preferred to provide the fuel pump 121 upstream of the plurality of primary filtration devices 122a-d, as illustrated. In some embodiments, the fuel pump 121 has a variable speed drive, for regulating the flow of fuel through the filtration system 120. The variable speed drive can be used to match consumption of the engine 4 to the flow rate of the fuel in the fuel system 20.

In some embodiments, the fuel pump 121 may be configured to prevent or hinder fuel flow from any of the primary filtration devices 122a-d towards the settling tank 110. In some embodiments, the filtration system 120 may comprise a valve (not shown) through which fuel flowing from the settling tank 110 to the arrangement of primary filtration devices 122a-d passes, and for preventing or hindering fuel flow from the primary filtration devices 122a-d towards the settling tank 110.

In this embodiment, the filtration system comprises a heater 123. The heater 123 is for heating fuel flowing from the settling tank 110 to the plurality of primary filtration device 122a-d. The heater 123 is an electric heater 123, though it will be understood that any suitable heater may be employed, such as a heater 123 configured to receive heated oil or other coolant flowing from the engine 4, or from any other hydraulic system comprising heated fluid. In this embodiment, the heater 123 is a part of the filtration system 120. In other embodiments, the heater 123 is a part of the fuel system 10, and the filtration system 120 is provided without the heater 123. As such, in some embodiments, the heater 123 may be located upstream or downstream of the inlet 124a, and/or upstream or downstream of the pump 121. In a similar way as described hereinbefore in relation to the primary filtration devices 122a-d, it is easier to push fuel through the heater 123 than pull it, so it is preferred to provide the fuel pump 121 upstream of the heater 123, as illustrated.

In some embodiments, the fuel system 10 and/or the filtration system 120 may comprise one or more pre-filters or strainers for removing particularly large particulate matter before the fuel passes through the arrangement of primary filtration devices 122a-d when the filtration system 120 is operating in the first mode.

Turning temporarily to Figures 3A and 3B, which each show a more detailed schematic view of a filtration device (herein referred to with the singular numeral "122") of the plural primary filtration devices 122a-d of the illustrated embodiment, it can be seen that the filtration device 122 comprises two filters 180a-b. Specifically, the filtration device 122 comprises a first filter 180a and a second filter 180b, though any other suitable number of filters 180a-b may be employed, such as three, four, five, six or more filters, or only one filter. The filters 180a-b may be filter cloths or meshes, for example, for allowing passage of liquid but preventing flow of solid matter over a certain particulate size. The primary filtration device 122 may comprise one or more different filter 180a-b configurations where the filters 180a-b comprise different weaves or mesh configurations. In some embodiments, the filters 180a-b can comprise a medium made from one or more of paper, pleated paper filters, cellulose, woven, knitted or wound fibres such as cloth, ceramic fibres, fabrics, foams, ceramic foams, metal fibre filters, metal mesh filters sintered metal, and/ or wall-flow monolith structures. In this embodiment, each filter comprises a shaped mesh, such as a conical mesh, wherein fuel is passed through an opening in an end of the conical mesh and through a longitudinal wall defined by the conical mesh, in use. In other embodiments, any other suitably shaped mesh may be employed, such as a cylindrical or hemispherical mesh. In other embodiments, each filter 180a-b may comprise a planar mesh, such as a plate or screen comprising a plurality of openings therethrough.

The filtration device 122 comprises a filter inlet 186a through which fuel is received in the filtration device 122 and a filter outlet 186b through which fuel is expelled from the filtration device 122. As such, with reference to Figure 2, the filter inlet 186a of each primary filtration device 122a-d is fluidly connected to the inlet 124a of the filtration system 120, either directly or via another primary filtration device 122a-d. Specifically, in the present embodiment, the filter inlet 186a of the first primary filtration device is connected to the inlet 124a, while the filter inlet 186a of the second primary filtration device 122b is fluidly connected to the outlet 186b of the first primary filtration device 122a, so as to receive fuel expelled from the outlet 186b of the first primary filtration device 122a.

Returning to Figures 3A and 3B, the filters 188a-b are provided in a parallel fluid arrangement between the inlet 186a and the outlet 186b. In this embodiment, the filtration device 122 comprises a filter valve arrangement (not labelled) comprising first and second drain valves 181a, 181b and first and second backflush valves 182a, 182b for directing fuel through the filtration device 122, in use. The filter valve arrangement will be described in more detail hereinafter. Broadly speaking, the filtration system 120 is configured to cause the primary filtration device 122 to operate selectively in either: a first mode, as illustrated in Figure 3A, in which the filtration system 120 causes fuel to flow, in use, in a first fluid direction 188 through one of the filters 180a-b, such as the first filter 180a, so that the first filter 180a removes contaminants from the fuel; or a second mode, as illustrated in Figure 3B, in which the filtration system 120 causes fuel to flow, in use, through the first filter 180a in a second fluid direction 189, opposite to the first fluid direction 188, to dislodge the contaminants from the first filter 180a.

In the illustrated embodiment, the filtration device 122 comprises a backflush supply 185 in the form of a hydraulic accumulator 185. The filtration system 120 is configured to cause the hydraulic accumulator 185 to store filtered fuel that is filtered by either one or both of the filters 180a-b in the first mode. In other embodiments, there may be plural filters and plural hydraulic accumulators associated with the respective filters. This is by the hydraulic accumulator 185 being fluidly connected to the first and second filters 180a-b by respective first and second backflush valves 182a-b. The first backflush valve 182a is configured to selectively couple the first filter 180a with either the filter outlet 186b or the hydraulic accumulator 185. In this way, the first backflush valve 182a, for example, is operable in the first mode to permit fuel filtered by the first filter 180a to flow to either the filter outlet 186b or the hydraulic accumulator 185, for example to charge the hydraulic accumulator 185. It will be appreciated that, in some embodiments, the first backflush valve 182a may be operable in the first mode to permit fuel to flow to both the accumulator 185 and the outlet 186b. The first backflush valve 182a is operable, in the second mode, to decouple the first filter 185a from the outlet 186b and to permit fuel to flow from the hydraulic accumulator 185 through the first filter 180a in the second fluid direction 189 so that filtered fuel stored in the hydraulic accumulator 185 is provided to the first filter 180a for backflushing the first filter 180a, i.e. to dislodge contaminants from the first filter 180a. It will be appreciated that the second backflush valve 182b is configured in a similar way to the first backflush valve 182a, but is instead operable to pass fuel between the second filter 180b, the hydraulic accumulator 185 and the outlet 186b.

In this embodiment, the filtration device 122 also comprises a first drain valve 181a, a second drain valve 181b and a backflush drain 187 fluidly coupled to the first and second drain valves 181a-b. The backflush drain valves 181a-b are located on an opposite side of the respective filters 180a-b than the respective backflush valves 182a-b. Specifically, the backflush drain valves 181a-b are provided upstream of the respective filters 180a-b, between the filter inlet 186a and the respective filters 180a-b. The first drain valve 181a is configured to selectively couple the first filter 180a with either the filter inlet 186a or the backflush drain 187. Specifically, the first drain valve 181a is operable to, in the first mode, permit fuel to flow from the filter inlet 186a through the first filter 180a in the first fluid direction 188 to provide filtered fuel from the first filter 180a. The first drain valve 181a is operable to, in the second mode, permit fuel to flow from the first filter 180a in the second fluid direction 189 to the backflush drain 187. In this way, fuel containing dislodged contaminants from the first filter 180a, such as fuel passed through the first filter 180a in the second fluid direction 189 from the hydraulic accumulator 185, may be passed to the backflush drain 187 in the second mode. It will be appreciated that the second drain valve 181b is configured in a similar way to the first drain valve 181a, but is instead operable to pass fuel between the second filter 180b, the inlet 186a and the backflush drain 187.

In this embodiment, the filtration system also comprises first and second pressure sensors 183a-b. The first and second pressure sensors 183a-b are configured to detect a pressure downstream of the respective first and second filters 180a-b and to send signals indicative of the pressure to a controller, such as a controller 140 of the filtration system, which will be described in more detail hereinafter. The pressure signals may be used to determine when a respective filter requires backflushing. For example, an increased pressure drop across one of the filters 180a-b may be indicative of soiling of that filter 180a-b reaching a threshold. In some embodiments, the pressure sensors 183a and 183b may be located elsewhere, such as by providing a single pressure sensor at the outlet 186b, or may not be present. In some embodiments, the backflushing of the filters 180a, 180b may be performed independently of the pressure sensed by the pressure sensors 183a-b, such as periodically, and/or may be triggered by any other suitable metric.

In this embodiment, the hydraulic accumulator 185 comprises a piston or diaphragm (not shown). The piston or diaphragm may be actuatable by subjecting the piston or diaphragm to stored compressed air on a first side thereof in order to apply a pressure to filtered fuel stored on a second, opposite side of the piston or diaphragm. This may be to drive the filtered fuel towards one or both of the filters 180a, 180b in the second mode. In other embodiments, the piston or diaphragm may be operated mechanically, electronically or electromechanically. In some embodiments, the hydraulic accumulator 185 may be configured to receive filtered fuel from any one or more of the filtration devices 122a-d in the filtration system 120 in the first mode, and to deliver the filtered fuel selectively to any one or more filters 180a-b of the plurality of filtration devices 122a-d in the second mode. In other embodiments, there is no hydraulic accumulator 185 and the backflush supply 185 comprises a fluid line (not shown) upstream of the outlet 124b of the filtration system 120 and downstream of a filter 180a-b of at least one of the filtration devices 122a-d. In such embodiments, the backflush supply 185 may comprise a tap for tapping fuel from the fluid line. The fluid line may, for example, be a part of, or may at least in part define the filter outlet 186b. In such embodiments, the filtration system may be configured, in the second mode (e.g. as in Figure 3B), to cause fuel to flow through the second filter 180b in the first fluid direction 188 to the fluid line and to cause fuel to pass from the backflush supply 185 through the first filter 180a in the second fluid direction 189 without fuel being drawn from the service tank. While in this embodiment the backflush supply 185 supplies fuel that has passed through the filter 180a when the primary filtration device 122a-d is operating in the first mode, in other embodiments the backflush supply 185 may be any other backflush supply 185 suitable for supplying a fluid to backflush the filters 180a-b of the respective primary filtration devices 122a-d.

It will be understood and appreciated by the skilled reader that the drain valves 181a-b and the backflush valves 182a-b may instead be implemented by (and thus comprise) a single valve or plural valves located in the flow paths and operable to determine the flow path that fuel approaching the valve is to take. In some embodiments, the drain valves 181a-b, backflush valves 181a-b, pressure sensors 183a-b, and/or the backflush supply 185 may be comprised in and controlled by the filtration system 120, rather than the filtration device 122. In this way, the filtration device 122 may be provided as a simple, passive component comprising one or more filters 180a-b and comprising few, if any, valves, pressure sensors, or other such controllable devices.

It will be understood that the filtration device 122 may comprise any suitable number of filters 180a-b. Moreover, each of the filters 180a-b may be backflushable (for example by passing filtered fuel through the respective filter 180a-b in the second fluid direction 189) at any given time, simultaneously or independently of each other filter 180a-b. In some embodiments, the filtration device 122 comprises a single filter 180a (i.e. the number of filters comprised in the filtration device 122 is only one) so that fuel is passed in the first fluid direction 188 through the single filter 180a in the first mode and backflushed in the second fluid direction 189 through the single filter 180a in the second mode. This is less preferable, as it would mean that fuel may only be passed through the filtration device 122 either towards the outlet 124b and/or backflush supply 185, or towards the backflush drain 187. That is, it may not be possible to cause the filtration device 122 to operate in the first and second modes simultaneously.

Returning now to Figure 2, in the illustrated embodiment, the filtration system 120 comprises a fuel return valve 128 via which each of the primary filtration devices 122a-d is connected to the service tank 130. The fuel return valve 128 is controllable by the filtration system controller 140 (discussed below) to direct fuel pumped by the fuel pump 121 either to the service tank 130 or back to the settling tank 110 via a fuel return path R that connects the fuel return valve 128 to the settling tank 110. It may be desirable to recirculate the fuel back to the settling tank 110 to regulate the fuel pressure when the vessel 1 is in port, or during emptying of the service tank 130, or to pass the fuel through the plurality of first filters 122a-d more than once if the fuel has a particularly high degree of solid contaminants, or to warm the fuel, for example. In other embodiments, the fuel return valve 128 and the fuel return path R may be omitted.

Furthermore, in this embodiment, the filtration system 220 comprises first and second bypass valves BV1, BV2, which are connected by a bypass B. The first bypass valve BV1 is located between the second primary filtration device 122b and the third and fourth primary filtration devices 122c-d, while the second bypass valve BV2 is located between the third and fourth primary filtration devices 122c-d and the service tank 130. In other embodiments, the first bypass valve BV1 may be located between the pump 121 and any one of the primary filtration devices 122a-d, such as between the heater 123 and any one of the primary filtration devices 122a-d. The first and second bypass valves BV1, BV2 are controllable by the controller 140, described below, to direct fuel pumped by the fuel pump 121 via the bypass B rather than via the third and fourth primary filtration devices 122c-d. This may be desirable to enable the pipes and fuel flowing therethrough to be warmed before using the third and fourth primary filtration devices 122c-d, which in this embodiment comprise finer filters 180a-b than the first and second primary filtration devices 122a-b comprise, as described hereinbefore. For example, fuel that may be warmed in the settling tank 110, and/or by the heater 123, is able to flow from the settling tank 110 via the fuel pump 121, the first and second primary filtration devices 122a-b, the bypass B, the fuel return valve 128, and the fuel return path R and then return to the settling tank 110. The first and second bypass valves BV1, BV2 may then be controlled, for example by the controller 140, to thereafter direct fuel pumped by the fuel pump 121 through each of the primary filtration devices 122a-d and on to the service tank 130. In other embodiments, the first and second bypass valves BV1, BV2 and the bypass B may be omitted.

In this embodiment, the filtration system 120 comprises a secondary filtration device 125 for removing the dislodged contaminants from fuel (termed "backflush fuel" herein, for brevity) that has passed through at least one of the primary filtration devices 122a-d when the at least one primary filtration device 122a-d is caused to operate in the second mode. The secondary filtration device 125 can, for example, comprise any one or more of the types of filtration device discussed herein for the primary filtration devices 122a-d, such as the filtration device 122 shown and described in relation to Figures 3A and 3B. That is, the secondary filtration device 125 is, in this embodiment, an independently back-flushable filtration device. In other embodiments, the secondary filtration device 125 may be any other suitable type of filtration device. In some embodiments, the secondary filtration device 125 can be configured to extract the same sized, or differently sized, contaminants from the fuel than one of the primary filtration devices 122a-d is configured to extract from the fuel, in use. For example, in this embodiment, the secondary filtration device 125 comprises a coarser filter 180a-b than the filters 180a-b comprised in each of the third and fourth primary filtration devices 122c-d, but in other embodiments the secondary filtration device 125 may comprise one or more filters 180a-b configured to extract substantially the same-sized contaminants from the fuel as the filters 180a-b in one or both of the third and fourth primary filtration devices 122c-d.

Specifically, in this embodiment, the secondary filtration device is a filtration device 122 as described above with reference to Figures 3A and 3B. Here, the inlet 186a is configured to receive backflush fuel from the primary filtration devices 122a-d via the collecting tank 150. The filtration system 120 is configured to cause the secondary filtration device 125 to operate in either: a filtering mode, wherein the filtration system 120 is configured to cause fuel to flow, in use, in a filtering fluid direction 188 (which corresponds to the first fluid direction 188 in the filtration device 122 shown in Figures 3A and 3B) through the first filter 180a of the secondary filtration device 125, the first filter of the secondary filtration device 125 being configured to remove the dislodged contaminants from the backflush fuel that has passed through a filter 180a of each primary filtration device 122a-d in the second fluid direction 189 to provide the secondary filtered fuel; or a cleaning mode, wherein the filtration system 120 is configured to cause fuel to flow, in use, through the filter 180a of the secondary filtration device 125 in a cleaning fluid direction 189 (corresponding to the first fluid direction 189 in the filtration device 122 shown in Figures 3A and 3B), opposite to the filtering fluid direction 188, to dislodge the contaminants from the filter 180a of the secondary filtration device 125..

In this embodiment, the filtration system 120 comprises a collector 126 for collecting the contaminants removed by the secondary filtration device 125. In some embodiments, the collector 126 is removable from the filtration system 120, such as for cleaning the collector 126 or for replacing the collector 126 when it is full or nearly full. For example, in some embodiments the collector 126 comprises a cartridge that is insertable in the secondary filtration device 125 and thereafter detachable from the secondary filtration device 125. In other embodiments, the collector 126 may be omitted.

In this embodiment, the filtration system 120 comprises a collecting tank 150, and each primary filtration device 122a-d is connected to the secondary filtration device 125 via the collecting tank 150. Backflush fuel from each of the primary filtration devices 122a-d, specifically from the backflush drains 187 of respective primary filtration devices 122a-d, collects in the collecting tank 150. In this embodiment, the collecting tank 150 is fluidly connected to an overflow tank 160, so that a volume of backflush fuel exceeding that storable in the collecting tank 150 is able to flow from the collecting tank 150 into the overflow tank 160 as required. In other embodiments, the overflow tank 160 may be omitted. Indeed, in some embodiments, the collecting tank 150 also may be omitted. In some embodiments, the collector 126 is a sludge tank 126 and the overflow tank 160 is, or is fluidly connected to, the sludge tank 126 so that excess fuel in the collecting tank 150 can be passed to the sludge tank 126 for disposal.

In this embodiment, each primary filtration device 122a-d is connectable to the settling tank 110 via the secondary filtration device 125. In this embodiment, each primary filtration device 122a-d is also connectable to the service tank 130 via the secondary filtration device 125. Accordingly, fuel from which the secondary filtration device 125 has removed the dislodged contaminants, (termed "secondary filtered fuel" herein, for brevity), is returnable to the settling tank 110 or flowable to the service tank 130.

Specifically, the filtration system comprises a first port 190 for fluidly connecting the secondary filtration device 125 to the service tank 130 and a second port 191 for fluidly connecting the secondary filtration device 125 to the settling tank. In this embodiment, the first port 190 is the outlet 124b, but it may be any other, separate port. The filtration system comprises a selector valve 129b operable to cause the secondary filtered fuel to flow selectively to the first port 190 or the second port 191.

In this embodiment, the fuel system 10 comprises an overflow valve 192 between the fuel return valve 128, the selector valve 129b and the settling tank 110. The overflow valve 192 is for selectively directing the fuel received from either: the primary filtration devices 122a-d, via the return valve 128; or the secondary filtration device 125, via the selector valve 129b, to the overflow tank 160 or to the settling tank 110. In some examples, the overflow valve is a part of the filtration system 120 but this need not be the case. In some examples, the overflow valve 192 may be omitted, or may be located elsewhere in the fuel system 10 and/or filtration system 120.

In some embodiments, the filtration system 120 may comprise one or more pre-filters or strainers for removing particularly large particulate matter before the backflush fuel passes through the secondary filtration device 125. In other embodiments, the filtration system 120 may comprise plural such secondary filtration devices 125 in any combination of series and parallel fluid arrangements, such as described hereinbefore in relation to the primary filtration devices 122a-d.

In the illustrated embodiment, the filtration system 220 comprises a second filter pump 127, such as a piston pump, and the collecting tank 150 is connected to the secondary filtration device 125 via the second filter pump 127. The second filter pump 127 is operable to pump backflush fuel from the collecting tank 150 to and through the secondary filtration device 125 so that the secondary filtration device 125 can remove the contaminants from the backflush fuel. In some embodiments, the second filter pump 127 may be located between the collecting tank 150 and the secondary filtration device 125 and be non-integral with the secondary filtration device 125 (as illustrated). In other embodiments, the second filter pump 127 may be located elsewhere. For example, in some embodiments, the second filter pump 127 is integral with the secondary filtration device 125, or is in the collecting tank 150, or the secondary filtration device 125 may be connected to the settling tank 110 via the second filter pump 127. In some embodiments, the second filter pump 127 may be omitted. For example, in some embodiments, backflush fuel may be able to flow through the secondary filtration device 125 under the influence of gravity. However, it is preferred that the second filter pump 127 is provided.

In this embodiment, the filtration system comprises a circulation valve 129a fluidly connected downstream of the secondary filtration device 125 and operable to pass secondary filtered fuel from the secondary filtration device selectively to the selector valve 129b or back to the collecting tank 150. The circulation valve 129a and the collecting tank 150 are connected by a circulation path C. The circulation valve 129a is controllable, such as by the filtration system controller 140 described below, to direct the secondary filtered fuel pumped by the second filter pump 127 back to the collecting tank 150 (when provided, or to the secondary filtration device 125 when not) via the circulation path C rather than to the selector valve 129b (and subsequently the settling tank 110 or the service tank 130). This may be desirable if the secondary filtered fuel is still contaminated after passing through the secondary filtration device 125. The circulation valve 129a may be controlled to cause this circulation for a prolonged period so that the backflush fuel from the primary filtration devices 122a-d undergoes several rounds of filtering by the secondary filtration device 125. In other words, the filtration system 120 is configurable to create a circuit so that the second filter pump 127 is able to cause fuel to be passed through the secondary filtration device 125 and back to the second filter pump 127 plural times. It will be noted that the circuit comprising the circulation valve 129a, the circulation path C, the collecting tank 150, the second filter pump 127 and the secondary filtration device 125 can be isolated from each of the primary filtration devices 122a-d by respective isolation valves (such as the drain valves 181a-b described above in relation to Figures 3A and 3D) so that fuel can be circulated around this circuit while the primary filtration devices 122a-d continue to filter fuel on its way to the service tank 130, and/or or during backflushing of the primary filtration devices 122a-d. Therefore, the circuit may be isolated from the plurality of primary filtration devices 122a-d, so that the filtration system 120 can operate the respective primary filtration devices 122a-d in the first mode or second mode while the second filter pump 127 is causing fuel to be passed through the secondary filtration device 125 and back to the second filter pump 127 plural times. The circulation valve 129a may thereafter be controlled by the controller 140 to direct secondary filtered fuel pumped by the second filter pump 127 to the settling tank 110 or the service tank 130 via the selector valve 129b.

In some embodiments the circulation path C may be connected to a flow path connecting one or more of the primary filtration devices 122a-d with the collector 150 and/or the secondary filtration device 125. It will be appreciated that, in Figure 2, each of the fuel return valve 128, the first and second bypass valves BV1, BV2, the circulation valve 129a, the selector valve 129b and the overflow valve 192 is illustrated schematically as a single element at a junction of two flow paths. In some embodiments, any of these valves may comprise a single valve, such as a rotary selector valve, at the relevant junction. However, the skilled reader will appreciate that, in other embodiments, any of these valves instead may be implemented by (and thus comprise) plural valves located in the flow paths and operable to determine the flow path that fuel approaching the valve is to take. Similarly, it will be understood that where multiple valves are shown, the multiple valves may instead be implemented by a single valve or any other suitable arrangement of valves.

As alluded to above, the fuel system 20 of this embodiment comprises a controller 140 for controlling the filtration system 120. The controller 140 is comprised in the filtration system, though it will be understood that, in other embodiments, the controller 140 may be a part of the fuel system 10 and the filtration system 120 itself may be provided without such a controller 140. The controller 140 may comprise one or more microprocessor(s). In this embodiment, the controller 140 is communicatively connected to, and for controlling, each of: the fuel pump 121, the heater 123, each of the primary filtration devices 122a-d, the first and second bypass valves BV1, BV2, the fuel return valve 128, the second filter pump 127, the secondary filtration device 125, the circulation valve 129a, and the selector valve 129b as depicted by dashed lines in Figure 2. In some embodiments, some of these elements may be controlled by an entity other than the controller 140. Of course, in embodiments in which one or more of these elements is/are omitted, the controller 140 would not be communicatively connected to, and for controlling, such omitted element(s).

In this embodiment, as discussed hereinbefore, the filtration system 120 comprises one or more pressure sensors 183a-b, in this case comprised in a filtration device 122 and configured to detect a fuel pressure at a location between a filter 180a-b and the outlet 186b of the filtration device 122, the fuel pressure being a parameter of fuel that has flowed through the respective filter 180a-b. In some embodiments, the pressure sensor may be outside and downstream of the respective filtration device 122. In this embodiment, the or each pressure sensor 182a-b is communicatively connected to the controller 140 and is configured to send a signal indicative of the fuel pressure at the location to the controller 140. The controller 140 is configured to cause the filtration system 120 to operate in the second mode, when it is determined that the fuel pressure at the location is less than a predetermined threshold fuel pressure.

This determination could be made by the controller 140. For example, the pressure sensor(s) 182a-b may be configured to detect the fuel pressure and send the signal to the controller 140 constantly, periodically, or when instructed by the controller 140, and the controller 140 may be configured to determine whether the fuel pressure is less than the predetermined threshold fuel pressure on the basis of the received signal, such as by extracting information from the received signal and/or comparing the received signal or extracted information to data to which the controller 140 has access. Alternatively, the determination could be made other than at the controller 140, such as at the pressure sensor(s) 182a-b. For example, a pressure sensor 182a may be configured to detect the fuel pressure constantly, periodically, or when instructed by the controller 140, and to send the signal to the controller 140 only when the fuel pressure is less than the predetermined threshold fuel pressure, such as by comparing the detected pressure with the predetermined threshold fuel pressure. The controller 140 could then be configured to cause the filtration system 120 to operate in the second mode on the basis of having received the signal. In any event, it will be understood that the filtration system 120 comprises a sensor 182a-b configured to detect a parameter (in this case, pressure) of fuel at a location between the or each primary filtration device 122a-d and the service tank 130 and to send a signal to the controller 140 on the basis of the parameter detected, and the controller 140 is configured to cause the filtration system 120 to cause the respective primary filtration device 122a-d to operate in the second mode on the basis of the signal (either a characteristic or content of the signal, or the reception of the signal).

In other embodiments, additional or alternative sensors to the pressure sensors 182a-b may be provided to detect a condition of the or each primary filtration device 122a-d or a parameter of fuel at a location between the or each primary filtration device 122a-d and the service tank 130. For example, a mass flow sensor can be used to obtain information about the amount of fuel flow between the or each primary filtration device 122a-d and the service tank 130. Other sensors such as viscosity sensors, density sensors or any sensor for measuring a parameter of the fuel can be used. A change in a parameter of the fuel at this location can indicate that a respective primary filtration device 122a-d, or a particular filter 180a-b of the respective primary filtration device 122a-d, needs to be backflushed. Any such employed sensor may be communicatively connected to the controller 140, and configured to send a signal to the controller 140 on the basis of the condition or parameter detected. The controller 140 may be configured to cause the filtration system 120 to operate in the second mode on the basis of the signal (such as a characteristic or content of the signal, or the reception of the signal). In some other embodiments, there is no such sensor and the controller 140 receives a signal instead from a timer (not shown) indicating that a certain time period has elapsed since a previous backflushing of the primary filtration device 122. The controller 140 could be configured to then cause a respective primary filtration device 122a-d to operate in the second mode on the basis of having received such a signal.

The skilled reader will appreciate that, in some embodiments, the or each primary filtration device 122a-d and/or the secondary filtration device 125 may comprise its own in-built controller (not shown) configured to receive the signals and make the above-described determination. The in-built controller may then control the respective primary filtration device 122a-d or the secondary filtration device 125 accordingly.

In some embodiments, the filtration system 120 may be flushed, such as during a maintenance operation, for example by draining fuel comprised in the filtration system and flushing a fluid through the filtration system. The fluid used for flushing the filtration system 120 may be a fluid other than fuel. For example, the filtration system 120 may be flushed using a fluid such as water, steam, oil or air. This may be to remove a buildup of fuel or other contaminants in the filtration system 120, and/or components thereof.

While there is shown only one filtration system 120 in the fuel system 10 of Figure 2, in other embodiments the fuel system 10 could comprise plural such filtration systems 120 arranged in parallel, each comprising at least one primary filtration device 122a-d through which fuel flowing from the settling tank 110 to the service tank 130 passes. In some embodiments, the plural filtration systems 120 may be operable independently of each other. Accordingly, in some embodiments, one of the filtration systems 120 may be inactive, being flushed, or operating in one of the first and second modes, while another of the filtration systems 120 is operating in one of the first and second modes. In some embodiments, the filtration system controller 140 is for controlling each of the plural filtration systems 120. In other embodiments, each of the plural filtration systems 120 may be controlled by a respective one of plural controllers 140.

Example methods of operating a filtration system of a fuel system for an engine of a marine vessel will now be described with reference to Figures 4A to 4C. The methods will be described with reference to the filtration system 120 of Figure 2, but it will be appreciated that in still further embodiments the filtration system 120 used in the methods may be any of the variations to the filtration system 120 of Figures 2 and 3 described herein.

In one embodiment, as shown in Figure 4A, a method 400 comprises causing 401 each primary filtration device 122a-d in the arrangement of primary filtration devices 122a-d to operate, independently of each other primary filtration device 122a-d in the arrangement, in either: a first mode whereby fuel flows in the first fluid direction 188 through a filter 180a of the primary filtration device 122a-d, or a second mode whereby a fluid, such as fuel, flows through the filter 180a of the respective primary filtration device 122a-d in the second fluid direction 189, opposite the first fluid direction 188, to dislodge the contaminants from the respective primary filtration device 122a-d.

The method 400 optionally comprises operating 402 the pump 121 to cause fuel to flow from the inlet 124a through the plurality of primary filtration devices 122a-d. The method 400 optionally comprises operating 403a the heater 123 to heat fuel flowing in use from the inlet 124a to the outlet 124b and causing 403b the fuel heated by the heater 123 to flow to the primary filtration devices 122a-d in the arrangement.

In some embodiments, as described above, the arrangement comprises first and second primary filtration devices 122a-b in a series fluid arrangement with each other, and third and fourth primary filtration devices 122c-d in a parallel fluid arrangement with each other and each in a series fluid arrangement with the first and second primary filtration devices 122a-b. In some such embodiments, the method 400 optionally comprises causing 404 fuel to flow from the inlet 124a to the outlet 124b through the first and second primary filtration devices 122a-b before flowing through the third and/or fourth primary filtration devices 124c-d.

The method 400 optionally comprises causing 405a fuel to bypass the third and fourth primary filtration devices 122c-d, and flow for example towards the settling tank 110 or service tank 130 in use and, further optionally, causing 405b the bypassed fuel to flow through the heater 123.

The method 400 comprises causing 406 the secondary filtration device 125 to operate in a filtering mode, wherein the filtration system 10 is configured to cause fuel that has passed through the or each filter of the respective primary filtration devices 122a-d in the second fluid direction 189, for instance from the collector 150, to pass through a filter 180a of the secondary filtration device 125 in a filtering fluid direction 188 to provide secondary filtered fuel. The method 400 optionally comprises causing 406 the secondary filtration device 125 to operate in a cleaning mode, wherein the filtration system 10 is configured to cause fuel, for example the secondary filtered fuel, to flow, in use, through the filter 180a of the secondary filtration device 125 in a cleaning fluid direction 189, opposite to the filtering fluid direction 188, to dislodge contaminants from the filter 180a of the secondary filtration device 125.

The method 400 comprises causing 407 the secondary filtered fuel to flow to from the secondary filtration device 125 to either the first port 190 or the second port 191 by operating 407a the selector valve 129b for fluidly coupling the secondary filtration device 125 with the first port 190 or the second port 191. In this embodiment, the method 400 optionally comprises causing 408, such as by operating 408a the circulation valve 129a, the secondary filtered fuel to flow selectively to the collector 150 or the selector valve 129b.

In another embodiment, as shown in Figure 4B, a method 500 comprises causing 501 a primary filtration device 122a-d to operate in either the first mode or the second mode. It will be understood that in this embodiment there may be only one or more than one primary filtration device 122a-d in the filtration system 129 and the method 500 may comprise causing 501 the or each primary filtration device 122a-d to operate in the first or second mode as described, independently or otherwise.

In this embodiment, the method 500 further comprises causing 502 the contaminants that have been dislodged from the or each primary filtration device 122a-d (and the backflush fuel carrying the contaminants) when the respective primary filtration device 122a-d is operating in the second mode to pass through the secondary filtration device 125 to provide secondary filtered fuel. This could be according to any of the schemes discussed herein.

The illustrated method further comprises causing 503 the secondary filtered fuel to be passed selectively to the first port 190 or the second port 191 for fluid connection to the settling tank 110, as described hereinbefore.

The method 500 optionally comprises causing 504 the secondary filtration device 125 to operate in either the filtering mode, for example to cause fuel to flow from the collector 150 through the secondary filtration device 125 to provide the secondary filtered fuel, or the cleaning mode as described herein. The method 500 comprises causing 505, by operating 505a the selector valve 129b, the secondary filtered fuel to flow to from the secondary filtration device 125 to either the first port 190 or the second port 191.

In this embodiment, the method 500 optionally comprises causing 506, such as by operating 506a the circulation valve 129a, the secondary filtered fuel to flow selectively to the collector 150 or the selector valve 129b. The method 500 optionally comprises causing 507, such as by operating 507a the fuel return valve 128, the fuel filtered by the respective primary filtration device 122a-d to flow selectively to the first port 190 or the second port 191.

The method 500 optionally comprises operating 508 the pump 121 to cause fuel to flow from the inlet 124a through the respective primary filtration device 122a-d. The method 500 optionally comprises operating 509a the heater 123 to heat fuel flowing in use from the inlet 124a to the outlet 124b and casing 509b the fuel heated by the heater 123 to flow to the respective primary filtration device 122a-d. The method 500 optionally comprises causing 510a fuel to bypass the respective primary filtration device 122a-d, and flow for example towards the settling tank 110 or service tank 130 in use and, further optionally, causing 510b the bypassed fuel to flow through the heater 123.

In a further embodiment, as illustrated in Figure 4C, method 600 comprises causing 601 a primary filtration device 122a-d to operate in the first mode as described herein or the second mode in which the filtration system 10 causes a fluid, such as fuel, to flow from the backflush supply 185 through a filter 180a of the primary filtration device 122a-d in the second fluid direction 189 as described herein with reference to Figures 3A and 3B.. Again, in this embodiment, there may be only one or more than one primary filtration device 122a-d in the filtration system 129 and the method may comprise causing the or each primary filtration device 122a-d to operate in the first or second mode as described, independently or otherwise.

As described above, in some embodiments, the filter 180a is a first filter 180a, and the primary filtration device 122a-d comprises a second filter 180b. In such embodiments, the causing 601 the primary filtration device 122a-d to operate in the second mode may comprise causing 601 fuel to flow in the first fluid direction 188 through the second filter. The causing 601 the primary filtration device 122a-d to operate in the first mode may comprise causing 601 fuel to flow in the first fluid direction 188 through both the first and second filters 180a.

The method 600 optionally comprises causing 602 a backflush supply 185, e.g. an accumulator such as the accumulator 185, to store filtered fuel that is filtered by the filter of the primary filtration device in the first mode. The method 600 optionally comprises causing 603, for example by operating 603a the actuator associated with the accumulator 185, fuel to be expelled from the backflush supply 185 and through the filter 180a in the second fluid direction 189. The operating 603a may comprise operating 603a the actuator using compressed air, for example.

The method 600 comprises causing 604 the secondary filtration device 125 to operate in either the filtering mode, to cause fuel to flow from the collector 150 through the secondary filtration device 125 to provide the secondary filtered fuel, or the cleaning mode as described herein. The method 600 comprises causing 605, by operating 605a the selector valve 129b, the secondary filtered fuel to flow to from the secondary filtration device 125 to either the first port 190 or the second port 191.

In this embodiment, the method 600 optionally comprises causing 606, such as by operating 606a the circulation valve 129a, the secondary filtered fuel to flow selectively to the collector 150 or the selector valve 129b. The method 600 optionally comprises causing 607, such as by operating 607a the fuel return valve 128, the fuel filtered by the respective primary filtration device 122a-d to flow selectively to the first port 190 or the second port 191.

The method 600 optionally comprises operating 608 the pump 121 to cause fuel to flow from the inlet 124a through the respective primary filtration device 122a-d. The method 600 optionally comprises operating 609a the heater 123 to heat fuel flowing in use from the inlet 124a to the outlet 124b and causing 609b the fuel heated by the heater 123 to flow to the respective primary filtration device 122a-d. The method 600 optionally comprises causing 610a fuel to bypass the respective primary filtration device 122a-d, and flow for example towards the settling tank 110 or service tank 130 in use and, further optionally, causing 610b the bypassed fuel to flow through the heater 123.

Any one of the methods 400, 500, 600 described above may be implemented by the controller 140 or any other suitable controller. In some embodiments, the causing 401, 501, 601 the or each primary filtration device 122a-d to operate in the second mode in any of the above methods 400, 500, 600 may be on the basis of a signal, received for example from a sensor 183a-b, the signal being indicative of a condition of a filter 180a-b of the or each primary filtration device 122a-d, or a parameter of fuel at a location between the filter 180a-b and the outlet 124b (or the service tank, in use).

The skilled reader will appreciate that, in some embodiments, any one of the methods described above may be performed by a filtration system controller, such as the controller 140 shown in Figure 2. There is thus also provided a non-transitory computer-readable storage medium storing instructions that, if executed by a processor of a filtration system controller, cause the processor to carry out the method. The processor may be comprised in the controller 140 of Figure 2 or elsewhere.

The skilled reader will therefore appreciate that embodiments of the present invention provide filtration systems and fuel systems comprising the filtration systems for removing solid contaminants from fuel, while addressing the aforementioned problems in conventional, and alternative, systems.

In other embodiments, two or more of the above described embodiments may be combined. In other embodiments, features of one embodiment may be combined with features of one or more other embodiments.

## Claims

1. A filtration system (120) for a fuel system (10) for an engine (4) of a marine vessel (1), the filtration system (120) comprising:
an inlet (124a) for fluid connection to a settling tank (110), the settling tank being for cleaning fuel for the engine;
an outlet (124b) for fluid connection to a service tank (130), the service tank being for storing fuel for the engine; and
a primary filtration device (122a) fluidly connected between the inlet and the outlet so that fuel flowing in use from the settling tank via the inlet to the service tank via the outlet passes through the primary filtration device;
wherein the filtration system is configured to cause the primary filtration device to operate selectively in either:
a first mode, in which the filtration system causes fuel to flow, in use, in a first fluid direction (188) through a filter (180a) of the primary filtration device, the filter being configured to remove contaminants from the fuel, or
a second mode, in which the filtration system causes fuel to flow, in use, through the filter in a second fluid direction (189), opposite to the first fluid direction, to dislodge the contaminants from the filter;
wherein the filtration system comprises a secondary filtration device (125) for removing the dislodged contaminants from fuel that has passed through the filter in the second fluid direction to provide secondary filtered fuel, and second port (191) for fluidly connecting the secondary filtration device to the settling tank;
**characterized in that**
the filtration system comprises a first port for fluidly connecting the secondary filtration device to the service tank;
and a selector valve (129b) operable to cause the secondary filtered fuel to flow selectively to the first port or the second port; and
wherein the filtration system is configured to cause the secondary filtered fuel to flow from the secondary filtration device selectively to the first port or the second port.

2. The filtration system of claim 1, wherein the filtration system is configured to cause the secondary filtration device to operate selectively in either:
a filtering mode, wherein the filtration system is configured to cause fuel to flow, in use, in a filtering fluid direction (188) through a filter (180a) of the secondary filtration device, the filter of the secondary filtration device being configured to remove the dislodged contaminants from the fuel that has passed through the filter of the, or each, primary filtration device in the second fluid direction; or
a cleaning mode, wherein the filtration system is configured to cause fuel to flow, in use, through the filter of the secondary filtration device in a cleaning fluid direction (189), opposite to the filtering fluid direction, to dislodge the contaminants from the filter of the secondary filtration device.

3. The filtration system of claim 1 or claim 2, wherein the, or each, primary filtration device comprises a backflush supply (185) downstream of the filter of the respective primary filtration device, so that the backflush supply is fluidically connected between the filter and the outlet.

4. The filtration system of any one of claims 1 to 3, wherein the filter of the, or each, primary filtration device is a first filter (180a) and the, or each, primary filtration device comprises a second filter (180b), and wherein the filtration system is configured to cause fuel to flow, in the second mode, in the first fluid direction through the second filter.

5. The filtration system of claims 3 and 4, wherein the backflush supply comprises a fluid path upstream of the outlet and downstream of the filter, and a tap for tapping fuel from the fluid path, and
wherein the filtration system is configured in the second mode to: cause fuel to flow through the second filter in the first fluid direction to the fluid path; and cause fuel to pass from the fluid path, via the tap, through the first filter in the second fluid direction.

6. A method (500) of operating a filtration system (120) for a fuel system (10) for an engine (4) of a marine vessel (1), the filtration system comprising:
an inlet (124a) for fluid connection to a settling tank (110), the settling tank being for cleaning fuel for the engine;
an outlet (124b) for fluid connection to a service tank (130), the service tank being for storing fuel for the engine; and
a primary filtration device (122a) fluidly connected between the inlet and the outlet so that fuel flowing in use from the settling tank via the inlet to the service tank via the outlet passes through the primary filtration device,
wherein the method comprises causing (501) the primary filtration device to operate selectively in either:
a first mode, in which the filtration system causes fuel to flow, in use, in a first fluid direction (188) through a filter (180a) of the primary filtration device, the filter being configured to remove contaminants from the fuel; or
a second mode, in which the filtration system causes fuel to flow, in use, through the filter in a second fluid direction (189), opposite to the first fluid direction, to dislodge the contaminants from the filter,
wherein the filtration system comprises a secondary filtration device (125) for removing the dislodged contaminants from fuel that has passed through the filter in the second fluid direction to provide secondary filtered fuel, and second port (190) for fluidly connecting the secondary filtration device to the settling tank;
**characterized in that**
the filtration system comprises a first port (190) for fluidly connecting the secondary filtration device to the service tank;
and a selector valve (129b) for selectively fluidly coupling the secondary filtration device with the first port or the second port, and
wherein the method comprises causing (503) the secondary filtered fuel to flow from the secondary filtration device selectively to the first port or the second port.

7. A fuel system (10) for an engine (4) of a marine vessel (1), the fuel system comprising:
a settling tank (110) for cleaning fuel for the engine;
a service tank (130) for storing fuel for the engine; and
a filtration system (120) according to any one of claims 1 to 5, wherein the filtration system is fluidly connected between the settling tank and the service tank so that the inlet of the filtration system is fluidly connected to the settling tank and the outlet of the filtration system is fluidly connected to the service tank.

8. A marine vessel (1) comprising the fuel system of claim 7 or the filtration system of any one of claims 1 to 5.

## Patentansprüche

1. Filtrationssystem (120) für ein Kraftstoffsystem (10) für einen Motor (4) eines Wasserfahrzeugs (1), wobei das Filtrationssystem (120) umfasst:
einen Einlass (124a) zur Fluidverbindung mit einem Absetztank (110), wobei der Absetztank zum Reinigen von Kraftstoff für den Motor dient;
einen Auslass (124b) zur Fluidverbindung mit einem Servicetank (130), wobei der Servicetank zum Speichern von Kraftstoff für den Motor dient; und
eine primäre Filtrationsvorrichtung (122a), die fluidisch zwischen dem Einlass und dem Auslass derart verbunden ist, dass Kraftstoff, der im Gebrauch vom Absetztank über den Einlass zum Servicetank über den Auslass strömt, durch die primäre Filtrationsvorrichtung passiert;
wobei das Filtrationssystem konfiguriert ist, um die primäre Filtrationsvorrichtung selektiv in entweder:
einem ersten Modus, in dem das Filtrationssystem bewirkt, dass Kraftstoff im Gebrauch in einer ersten Fluidrichtung (188) durch einen Filter (180a) der primären Filtrationsvorrichtung strömt, wobei der Filter konfiguriert ist, um Verunreinigungen aus dem Kraftstoff zu entfernen, oder
einem zweiten Modus, in dem das Filtrationssystem bewirkt, dass Kraftstoff im Gebrauch durch den Filter in einer zweiten Fluidrichtung (189), entgegengesetzt zur ersten Fluidrichtung, strömt, um die Verunreinigungen vom Filter zu lösen;
wobei das Filtrationssystem eine sekundäre Filtrationsvorrichtung (125) zum Entfernen der gelösten Verunreinigungen aus Kraftstoff, der in der zweiten Fluidrichtung durch den Filter passiert ist, umfasst, um sekundär gefilterten Kraftstoff bereitzustellen, und einen zweiten Anschluss (191) zum fluidischen Verbinden der sekundären Filtrationsvorrichtung mit dem Absetztank;
**dadurch gekennzeichnet,**
**dass** das Filtrationssystem einen ersten Anschluss zum fluidischen Verbinden der sekundären Filtrationsvorrichtung mit dem Servicetank umfasst;
und ein Wählventil (129b), das betrieben werden kann, um zu bewirken, dass der sekundär gefilterte Kraftstoff selektiv zum ersten Anschluss oder zum zweiten Anschluss strömt; und
wobei das Filtrationssystem konfiguriert ist, um zu bewirken, dass der sekundär gefilterte Kraftstoff von der sekundären Filtrationsvorrichtung selektiv zum ersten Anschluss oder zum zweiten Anschluss strömt.

2. Filtrationssystem nach Anspruch 1, wobei das Filtrationssystem konfiguriert ist, um zu bewirken, dass die sekundäre Filtrationsvorrichtung selektiv in entweder:
einem Filtermodus betrieben wird, wobei das Filtrationssystem konfiguriert ist, um zu bewirken, dass Kraftstoff im Gebrauch in einer Filterfluidrichtung (188) durch einen Filter (180a) der sekundären Filtrationsvorrichtung strömt, wobei der Filter der sekundären Filtrationsvorrichtung konfiguriert ist, um die gelösten Verunreinigungen aus dem Kraftstoff zu entfernen, der in der zweiten Fluidrichtung durch den Filter der oder jeder primären Filtrationsvorrichtung passiert ist; oder
einem Reinigungsmodus, wobei das Filtrationssystem konfiguriert ist, um zu bewirken, dass Kraftstoff im Gebrauch durch den Filter der sekundären Filtrationsvorrichtung in einer Reinigungsfluidrichtung (189), entgegengesetzt zur Filterfluidrichtung, strömt, um die Verunreinigungen vom Filter der sekundären Filtrationsvorrichtung zu lösen.

3. Filtrationssystem nach Anspruch 1 oder Anspruch 2, wobei die oder jede primäre Filtrationsvorrichtung eine Rückspülversorgung (185) stromabwärts des Filters der jeweiligen primären Filtrationsvorrichtung umfasst, derart, dass die Rückspülversorgung fluidisch zwischen dem Filter und dem Auslass verbunden ist.

4. Filtrationssystem nach einem der Ansprüche 1 bis 3, wobei der Filter der oder jeder primären Filtrationsvorrichtung ein erster Filter (180a) ist und die oder jede primäre Filtrationsvorrichtung einen zweiten Filter (180b) umfasst und wobei das Filtrationssystem konfiguriert ist, um zu bewirken, dass Kraftstoff im zweiten Modus in der ersten Fluidrichtung durch den zweiten Filter strömt.

5. Filtrationssystem nach den Ansprüchen 3 und 4, wobei die Rückspülversorgung einen Fluidpfad stromaufwärts des Auslasses und stromabwärts des Filters und einen Abzweig zum Abzweigen von Kraftstoff aus dem Fluidpfad umfasst und
wobei das Filtrationssystem im zweiten Modus konfiguriert ist, um: zu bewirken, dass Kraftstoff durch den zweiten Filter in der ersten Fluidrichtung zum Fluidpfad strömt; und zu bewirken, dass Kraftstoff vom Fluidpfad über den Abzweig durch den ersten Filter in der zweiten Fluidrichtung passiert.

6. Verfahren (500) zum Betreiben eines Filtrationssystems (120) für ein Kraftstoffsystem (10) für einen Motor (4) eines Wasserfahrzeugs (1), wobei das Filtrationssystem umfasst:
einen Einlass (124a) zur Fluidverbindung mit einem Absetztank (110), wobei der Absetztank zum Reinigen von Kraftstoff für den Motor dient;
einen Auslass (124b) zur Fluidverbindung mit einem Servicetank (130), wobei der Servicetank zum Speichern von Kraftstoff für den Motor dient; und
eine primäre Filtrationsvorrichtung (122a), die fluidisch zwischen dem Einlass und dem Auslass derart verbunden ist, dass Kraftstoff, der im Gebrauch vom Absetztank über den Einlass zum Servicetank über den Auslass strömt, durch die primäre Filtrationsvorrichtung passiert,
wobei das Verfahren das Bewirken (501), dass die primäre Filtrationsvorrichtung selektiv in entweder:
einem ersten Modus betrieben wird, in dem das Filtrationssystem bewirkt, dass Kraftstoff im Gebrauch in einer ersten Fluidrichtung (188) durch einen Filter (180a) der primären Filtrationsvorrichtung strömt, wobei der Filter konfiguriert ist, um Verunreinigungen aus dem Kraftstoff zu entfernen; oder
einem zweiten Modus, in dem das Filtrationssystem bewirkt, dass Kraftstoff im Gebrauch durch den Filter in einer zweiten Fluidrichtung (189), entgegengesetzt zur ersten Fluidrichtung, strömt, um die Verunreinigungen vom Filter zu lösen, umfasst,
wobei das Filtrationssystem eine sekundäre Filtrationsvorrichtung (125) zum Entfernen der gelösten Verunreinigungen aus Kraftstoff, der in der zweiten Fluidrichtung durch den Filter passiert ist, umfasst, um sekundär gefilterten Kraftstoff bereitzustellen, und einen zweiten Anschluss (190) zum fluidischen Verbinden der sekundären Filtrationsvorrichtung mit dem Absetztank;
**dadurch gekennzeichnet, dass**
das Filtrationssystem einen ersten Anschluss (190) zum fluidischen Verbinden der sekundären Filtrationsvorrichtung mit dem Servicetank umfasst;
und ein Wählventil (129b) zum selektiven fluidischen Koppeln der sekundären Filtrationsvorrichtung mit dem ersten Anschluss oder dem zweiten Anschluss und
wobei das Verfahren das Bewirken (503), dass der sekundär gefilterte Kraftstoff von der sekundären Filtrationsvorrichtung selektiv zum ersten Anschluss oder zum zweiten Anschluss strömt, umfasst.

7. Kraftstoffsystem (10) für einen Motor (4) eines Wasserfahrzeugs (1), wobei das Kraftstoffsystem umfasst:
einen Absetztank (110) zum Reinigen von Kraftstoff für den Motor;
einen Servicetank (130) zum Speichern von Kraftstoff für den Motor; und
ein Filtrationssystem (120) nach einem der Ansprüche 1 bis 5, wobei das Filtrationssystem fluidisch zwischen dem Absetztank und dem Servicetank derart verbunden ist, dass der Einlass des Filtrationssystems fluidisch mit dem Absetztank und der Auslass des Filtrationssystems fluidisch mit dem Servicetank verbunden ist.

8. Wasserfahrzeug (1), umfassend das Kraftstoffsystem nach Anspruch 7 oder das Filtrationssystem nach einem der Ansprüche 1 bis 5.

## Revendications

1. Un système de filtration (120) pour un circuit de carburant (10) destiné à un moteur (4) d'un navire (1), le système de filtration (120) comprenant :
une entrée (124a) pour un raccordement fluidique à un décanteur (110), le décanteur servant à épurer le carburant pour le moteur ;
une sortie (124b) pour un raccordement fluidique à un réservoir de service (130), le réservoir de service servant à stocker le carburant pour le moteur ; et
un dispositif de filtration primaire (122a) raccordé de manière fluidique entre l'entrée et la sortie de sorte que le carburant s'écoulant, en fonctionnement, depuis le décanteur via l'entrée vers le réservoir de service via la sortie, traverse le dispositif de filtration primaire ;
dans lequel le système de filtration est configuré pour amener le dispositif de filtration primaire à fonctionner sélectivement soit dans :
un premier mode, dans lequel le système de filtration amène le carburant à s'écouler, en fonctionnement, à travers un filtre (180a) du dispositif de filtration primaire dans une première direction de fluide (188), le filtre étant configuré pour éliminer les contaminants du carburant, soit
un second mode, dans lequel le système de filtration amène le carburant à s'écouler, en fonctionnement, à travers le filtre dans une seconde direction de fluide (189), opposée à la première direction de fluide, pour déloger les contaminants du filtre ;
dans lequel le système de filtration comprend un dispositif de filtration secondaire (125) pour éliminer les contaminants délogés du carburant qui a traversé le filtre dans la seconde direction de fluide afin de fournir un carburant filtré secondaire, et un second orifice (191) pour raccorder de manière fluidique le dispositif de filtration secondaire au décanteur ;
**caractérisé en ce que** le système de filtration comprend un premier orifice pour raccorder de manière fluidique le dispositif de filtration secondaire au réservoir de service ;
et une vanne de sélection (129b) apte à être actionnée pour amener le carburant filtré secondaire à s'écouler sélectivement vers le premier orifice ou le second orifice ; et
dans lequel le système de filtration est configuré pour amener le carburant filtré secondaire à s'écouler depuis le dispositif de filtration secondaire sélectivement vers le premier orifice ou le second orifice.

2. Le système de filtration selon la revendication 1, dans lequel le système de filtration est configuré pour amener le dispositif de filtration secondaire à fonctionner sélectivement soit dans
un mode de filtrage, dans lequel le système de filtration est configuré pour amener le carburant à s'écouler, en fonctionnement, dans une direction de fluide de filtrage (188) à travers un filtre (180a) du dispositif de filtration secondaire, le filtre du dispositif de filtration secondaire étant configuré pour éliminer les contaminants délogés du carburant qui a traversé le, ou chaque, dispositif de filtration primaire dans la seconde direction de fluide ; soit
un mode de nettoyage, dans lequel le système de filtration est configuré pour amener le carburant à s'écouler, en fonctionnement, à travers le filtre du dispositif de filtration secondaire dans une direction de fluide de nettoyage (189), opposée à la direction de fluide de filtrage, pour déloger les contaminants du filtre du dispositif de filtration secondaire.

3. Le système de filtration selon la revendication 1 ou la revendication 2, dans lequel le, ou chaque, dispositif de filtration primaire comprend une alimentation de lavage à contre-courant (185) en aval du filtre du dispositif de filtration primaire respectif, de sorte que l'alimentation de lavage à contre-courant est raccordée de manière fluidique entre le filtre et la sortie.

4. Le système de filtration selon l'une quelconque des revendications 1 à 3, dans lequel le filtre du, ou de chaque, dispositif de filtration primaire est un premier filtre (180a) et le, ou chaque, dispositif de filtration primaire comprend un second filtre (180b), et dans lequel le système de filtration est configuré pour amener le carburant à s'écouler, dans le second mode, dans la première direction de fluide à travers le second filtre.

5. Le système de filtration selon les revendications 3 et 4, dans lequel l'alimentation de lavage à contre-courant comprend un trajet de fluide en amont de la sortie et en aval du filtre, et une prise pour prélever du carburant depuis le trajet de fluide, et
dans lequel le système de filtration est configuré dans le second mode pour : amener le carburant à s'écouler à travers le second filtre dans la première direction de fluide vers le trajet de fluide ; et amener le carburant à passer depuis le trajet de fluide, via la prise, à travers le premier filtre dans la seconde direction de fluide.

6. Un procédé (500) de mise en œuvre d'un système de filtration (120) pour un circuit de carburant (10) destiné à un moteur (4) d'un navire (1), le système de filtration comprenant :
une entrée (124a) pour un raccordement fluidique à un décanteur (110), le décanteur servant à épurer le carburant pour le moteur ;
une sortie (124b) pour un raccordement fluidique à un réservoir de service (130), le réservoir de service servant à stocker le carburant pour le moteur ; et
un dispositif de filtration primaire (122a) raccordé de manière fluidique entre l'entrée et la sortie de sorte que le carburant s'écoulant, en fonctionnement, depuis le décanteur via l'entrée vers le réservoir de service via la sortie, traverse le dispositif de filtration primaire,
dans lequel le procédé comprend le fait d'amener (501) le dispositif de filtration primaire à fonctionner sélectivement soit dans :
un premier mode, dans lequel le système de filtration amène le carburant à s'écouler, en fonctionnement, dans une première direction de fluide (188) à travers un filtre (180a) du dispositif de filtration primaire, le filtre étant configuré pour éliminer les contaminants du carburant ; soit
un second mode, dans lequel le système de filtration amène le carburant à s'écouler, en fonctionnement, à travers le filtre dans une seconde direction de fluide (189), opposée à la première direction de fluide, pour déloger les contaminants du filtre,
dans lequel le système de filtration comprend un dispositif de filtration secondaire (125) pour éliminer les contaminants délogés du carburant qui a traversé le filtre dans la seconde direction de fluide afin de fournir un carburant filtré secondaire, et un second orifice (190) pour raccorder de manière fluidique le dispositif de filtration secondaire au décanteur ;
**caractérisé en ce que** le système de filtration comprend un premier orifice (190) pour raccorder de manière fluidique le dispositif de filtration secondaire au réservoir de service ;
et une vanne de sélection (129b) pour coupler de manière fluidique et sélective le dispositif de filtration secondaire avec le premier orifice ou le second orifice, et
dans lequel le procédé comprend le fait d'amener (503) le carburant filtré secondaire à s'écouler depuis le dispositif de filtration secondaire sélectivement vers le premier orifice ou le second orifice.

7. Un circuit de carburant (10) pour un moteur (4) d'un navire (1), le circuit de carburant comprenant :
un décanteur (110) pour épurer le carburant pour le moteur ;
un réservoir de service (130) pour stocker le carburant pour le moteur ; et
un système de filtration (120) selon l'une quelconque des revendications 1 à 5, dans lequel le système de filtration est raccordé de manière fluidique entre le décanteur et le réservoir de service de sorte que l'entrée du système de filtration est raccordée de manière fluidique au décanteur et la sortie du système de filtration est raccordée de manière fluidique au réservoir de service.

8. Un navire (1) comprenant le circuit de carburant selon la revendication 7 ou le système de filtration selon l'une quelconque des revendications 1 à 5.
